# EUROPÄISCHE PATENTSCHRIFT

(11) **EP 4 238 940 B1**
(45) Veröffentlichungstag und Bekanntmachung des Hinweises auf die Patenterteilung: **12.02.2025**
(21) Anmeldenummer: 23183101.7
(22) Anmeldetag: 26.02.2019
(51) Int. Cl.: C02F 1/28, C02F 1/52, C02F 1/54, C08F 299/00, C07F 7/12, C07F 7/21, C08G 77/04, C08L 83/06, C02F 103/00, C02F 103/06, C02F 103/08, C02F 101/30

(54) **VERWENDUNG VON SILSESQUIOXANEN ZUR ENTFERNUNG VON MIKROPLASTIK-PARTIKELN AUS WASSER UND/ODER EINEM GEWÄSSER**
USE OF SILSESQUIOXANES FOR REMOVING MICROPLASTIC PARTICLES FROM WATER AND/OR A BODY OF WATER
UTILISATION DE SILSESQUIOXANES POUR ÉLIMINER DES PARTICULES DE MICROPLASTIQUE DE L'EAU ET/OU D'UNE MASSE D'EAU

(30) Priorität: 02.03.2018 DE 102018203185
(43) Veröffentlichungstag der Anmeldung: 06.09.2023
(62) Teilanmeldung aus: 19708982.4
(73) Patentinhaber: ABCR GmbH, 76187 Karlsruhe (DE)
(72) Erfinder: Herbort, Adrian Frank, 37339 Leinefelde-Worbis OT Kirchohmfeld (DE); Schuhen, Katrin, 76187 Karlsruhe (DE)
(74) Vertreter: Patentanwälte Ruff, Wilhelm, Beier, Dauster & Partner mbB

(56) Entgegenhaltungen:
- DE-A1- 102015 207 061
- US-A1- 2003 159 997
- US-A1- 2016 263 552
- HERBORT ADRIAN FRANK ET AL: "A concept for the removal of microplastics from the marine environment with innovative host-guest relationships", ENVIRONMENTAL SCIENCE AND POLLUTION RESEARCH INTERNATIONAL, ECOMED, LANDSBERG, DE, vol. 24, no. 12, 16 July 2016 (2016-07-16), pages 11061 - 11065, XP036211874, ISSN: 0944-1344, [retrieved on 20160716], DOI: 10.1007/S11356-016-7216-X
- TALVITIE JULIA ET AL: "Solutions to microplastic pollution - Removal of microplastics from wastewater effluent with advanced wastewater treatment technologies", WATER RESEARCH, ELSEVIER, AMSTERDAM, NL, vol. 123, 2 July 2017 (2017-07-02), pages 401 - 407, XP085179585, ISSN: 0043-1354, DOI: 10.1016/J.WATRES.2017.07.005

## Beschreibung

### ANWENDUNGSGEBIET UND STAND DER TECHNIK

Die Erfindung betrifft die Verwendung von Silsesquioxanen zur Entfernung von Mikroplastik-Partikeln aus Wasser und/oder einem Gewässer, ein Verfahren zum Entfernen von Mikroplastik-Partikeln aus Wasser und/oder einem Gewässer, eine Einschlussverbindung sowie die Verwendung eines Kits zum Entfernen von Mikroplastik-Partikeln aus Wasser und/oder einem Gewässer.

Die Problematik der Mikroplastikkontamination erlangt zunehmend Aufmerksamkeit in der Gesellschaft.

Die Quellen und Eintragspfade für Kunststoffe in die Umwelt sind vielfältig. Durch direkten Eintrag (sogenannter primärer Eintrag) gelangen beispielsweise Mikropartikel aus Kosmetika oder durch Waschmaschinenabrieb von synthetischen Fasern in das Abwasser. Zusätzlich sind Mikropartikel potentielle Träger für Schadstoffe und Bakterien, welche auch pathogene Eigenschaften besitzen können.

Je nach Partikeldurchmesser erfolgt die Partikelelimination in Kläranlagen individuell. Die Entfernung von Partikeln mit einem Durchmesser bzw. einer Größe > 5 mm erfolgt üblicherweise mittels Rechen- und Sandfang. Anders verhält es sich bei Partikeln, welche in geringen Konzentrationen und in einem Größenbereich < 5 mm, insbesondere in einem Größenbereich von 0,01 µm bis 1 µm, vorliegen, da diese in der Regel ungeladen sind und mithin nicht zu ionischen Wechselwirkungen tendieren.

Diese inerten Kleinstpartikel passieren aufgrund ihrer geringen Größe leichter und teilweise ungehindert die Reinigungsstufen einer Abwasserbehandlungsanlage, da sie weder durch Fällungsreagenzien abgetrennt noch durch Flockungsmittel in Makroflocken überführt werden können. Im Falle von Mikroplastik-Partikel kommt erschwerend hinzu, dass diese in der Regel eine geringere Dichte aufweisen als Wasser und daher ohnehin nicht zur Sedimentation neigen. Resultierend verlassen diese Partikel die Abwasserbehandlungsanlage gemeinsam mit dem gereinigten Abwasser und gelangen somit in den Wasserkreislauf.

Über diesen Weg kommt es zu ihrer Verteilung im Ökosystem mit unter Umständen weitreichenden Auswirkungen (beispielsweise Bioakkumulation) für Tiere und Menschen.

Aktuell existiert eine Vielzahl von Möglichkeiten, eine Fest-Flüssig-Trennung zur Eliminierung von Partikeln aus Wasser durchzuführen. Die entsprechenden Verfahren besitzen jedoch limitierende Faktoren. Entweder ist die Effektivität, wie beispielsweise im Falle von Sedimentation und Flockung, zu gering und das Verfahren zu unflexibel. Oder es müssen, wie im Falle der Tiefenfiltration, Mikrofiltration und Ultrafiltration, zusätzlich Chemikalien in das Abwasser eingebracht werden, welche nachweislich einen Einfluss auf die Umwelt haben oder eine effiziente Sekundärstoffverwertung oder Materialgewinnung verhindern. Weiterhin sind die Verfahren durch hohe Anschaffungs- und Betriebskosten gekennzeichnet und benötigen zusätzliche Infrastruktur.

Aus der US 2016/0263552 A1 ist ein silsesquioxanhaltiger Artikel zum Absorbieren von Flüssigkeiten bekannt.

Die US 2003/0159997 A1 offenbart Arylen-überbrückte Polysilsesquioxane zur Entfernung von Phenol-Verbindungen aus Abwasser.

Gegenstand der DE 10 2015 207 061 A1 ist ein Hybridkieselsäurematerial zur Entfernung und/oder zum Nachweis anthropogener Verunreinigungen aus Wasser.

Ferner ist die Verwendung von Alkoxysilyl-funktionalisierten Vorläuferbiomolekülen zum Einschluss von Plastikpartikeln bekannt (Herbort Adrian Frank et al.: "A concept for the removal of microplastics from the marine environment with innovative host-guest relationships", Environ Sci Pollut Res (2017) 24:11061-11065).

### AUFGABE UND LÖSUNG

Die Erfindung stellt sich daher die Aufgabe, Verbindungen bereitzustellen, welche die Entfernung von Mikroplastik-Partikeln aus Wasser und/oder Gewässern und mithin die Reinigung von Wasser und/oder Gewässern ermöglichen. Des Weiteren stellt sich die Erfindung die Aufgabe, ein entsprechendes Verfahren, eine Einschlussverbindung sowie ein Kit bereitzustellen.

Diese Aufgaben werden erfindungsgemäß gelöst durch eine Verwendung gemäß den Merkmalen des unabhängigen Anspruchs 1, durch ein Verfahren gemäß Anspruch 12, durcheine Einschlussverbindung mit den Merkmalen des Anspruchs 14 sowie durch die Verwendung eines Kits mit den Merkmalen des Anspruchs 15. Bevorzugte Ausgestaltungen der Erfindung sind in den abhängigen Ansprüchen sowie in der Beschreibung beschrieben. Der Wortlaut sämtlicher Ansprüche wird hiermit ausdrücklich zum Inhalt der vorliegenden Beschreibung gemacht.

Die Erfindung betrifft gemäß einem ersten Aspekt die Verwendung eines Silsesquioxans, vorzugsweise eines käfigförmigen Silsesquioxans, der nachstehenden Formel II

[RSiO_{3/2}]ₙ (Formel II),

wobei
R eine Alkylgruppe, Si ein Siliziumatom, O ein Sauerstoffatom und n eine ganze Zahl bedeuten,
zur Entfernung von Mikroplastik-Partikeln aus Wasser, insbesondere Abwasser und/oder Betriebswasser und/oder Sickerwasser und/oder Trinkwasser, und/oder einem Gewässer.

Der Ausdruck "ein Silsesquioxan" kann im Sinne der vorliegenden Erfindung ein Silsesquioxan (Einzahl) oder eine Vielzahl, insbesondere eine Mischung, unterschiedlicher Silsesquioxane bedeuten.

Unter dem Ausdruck "Mikroplastik-Partikel" sollen im Sinne der vorliegenden Erfindung Kunststoff-Partikel oder Kunststoff-Teilchen verstanden werden, welche einen Kunststoff oder eine Kombination, insbesondere Mischung (Blend), von Kunststoffen aufweisen oder aus einem Kunststoff oder einer Kombination, insbesondere Mischung (Blend), von Kunststoffen bestehen und einen Durchmesser, insbesondere mittleren Durchmesser, von 100 nm bis 5 mm aufweisen.

Unter dem Ausdruck "große Mikroplastik-Partikel" sollen im Sinne der vorliegenden Erfindung Kunststoff-Partikel oder Kunststoff-Teilchen mit einem Durchmesser, insbesondere mittleren Durchmesser, von größer 1 mm bis 5 mm verstanden werden.

Unter dem Ausdruck "kleine Mikroplastik-Partikel" sollen im Sinne der vorliegenden Erfindung Kunststoff-Partikel oder Kunststoff-Teilchen mit einem Durchmesser, insbesondere mittleren Durchmesser, von 100 nm bis 1 mm verstanden werden.

Unter dem Ausdruck "Wasser" soll im Sinne der vorliegenden Erfindung jede Form von Wasser, in der Regel von flüssigem Wasser, und/oder jede Form einer wässrigen Flüssigkeit, d.h. einer Wasser enthaltenden Flüssigkeit, verstanden werden. Insbesondere kann es sich bei dem Wasser im Sinne der vorliegenden Erfindung, wie oben bereits erwähnt, um Abwasser und/oder Betriebswasser und/oder Sickerwasser und/oder Trinkwasser handeln.

Unter dem Ausdruck "Abwasser" soll im Sinne der vorliegenden Erfindung ein durch Gebrauch verunreinigtes oder in seinen Eigenschaften oder seiner Zusammensetzung verändertes Wasser verstanden werden. Erfindungsgemäß sollen hierunter insbesondere Grauwasser und/oder Regenwasser und/oder Schwarzwasser und/oder Gelbwasser und/oder Braunwasser und/oder Niederschlagswasser und/oder beispielsweise durch bauliche Schäden anfallendes Fremdwasser, welches in die Kanalisation gelangt, verstanden werden.

Unter dem Ausdruck "Grauwasser" soll im Sinne der vorliegenden Erfindung (und in Übereinstimmung mit der europäischen Norm 12056-1) fäkalienfreies, gering verschmutztes Abwasser, wie es beispielsweise beim Duschen, Baden oder Händewaschen anfällt, aber auch aus der Waschmaschine kommt, und zur Aufbereitung zu Brauch- bzw. Betriebswasser dienen kann, verstanden werden.

Unter dem Ausdruck "Regenwasser" soll im Sinne der vorliegenden Erfindung zuvor verdunstetes Wasser aus Niederschlägen in flüssiger Form, dem Regen, verstanden werden.

Unter dem Ausdruck "Schwarzwasser" soll (in Übereinstimmung mit ISO 6107-7:1997) häusliches Abwasser ohne Grauwasser mit fäkalen Feststoffen verstanden werden.

Unter dem Ausdruck "Gelbwasser" soll im Sinne der vorliegenden Erfindung Urin und Urin mit Spülwasser verstanden werden.

Unter dem Ausdruck "Braunwasser" soll im Sinne der vorliegenden Erfindung Abwasser verstanden werden, welches nur Fäzes, Spülwasser und Toilettenpapier enthält.

Unter dem Ausdruck "Betriebswasser" soll im Sinne der vorliegenden Erfindung Wasser verstanden werden, welches einer spezifischen technischen, gewerblichen, landwirtschaftlichen oder hauswirtschaftlichen Anwendung dient. Betriebswasser ist anders als Trinkwasser nicht für den menschlichen Genuss vorgesehen, sollte jedoch einer gewissen Mindesthygiene entsprechen. In jedem Fall muss es den technologischen Anforderungen des jeweiligen Prozesses genügen.

Unter dem Ausdruck "Sickerwasser" soll im Sinne der vorliegenden Erfindung unterirdisches Wasser verstanden werden, welches sich unter der Einwirkung von Schwerkraft abwärts bewegt (sogenannte Sickerströmung).

Unter dem Ausdruck "Trinkwasser" soll im Sinne der vorliegenden Erfindung jedes Wasser verstanden werden, das zum Trinken, zum Kochen, zur Zubereitung von Speisen und Getränken sowie insbesondere zu häuslichen Zwecken, wie beispielsweise Körperpflege und - reinigung, Reinigung von Gegenständen, die bestimmungsgemäß mit Lebensmitteln in Berührung kommen (wie beispielsweise Gläser, Geschirr, Bestecke) sowie Reinigung von Gegenständen, die bestimmungsgemäß nicht nur vorübergehend mit dem menschlichen Körper in Kontakt kommen (wie beispielsweise Kleidung und Wäsche), bestimmt ist, verstanden werden.

Unter dem Ausdruck "Gewässer" soll im Sinne der vorliegenden Erfindung ein in der Natur fließendes oder stehendes Wasser, insbesondere Süßwasser und/oder Salzwasser und/oder Brackwasser, verstanden werden. Je nach Lage des Gewässers kann es sich hierbei um ein offenes Gewässer, d.h. ein über der Erde liegendes Gewässer, oder um ein geschlossenes Gewässer, d.h. um ein unterirdisches Gewässer, wie beispielsweise Grundwasser, handeln. Weiterhin kann es sich bei dem Gewässer um ein Binnengewässer oder um ein Meer handeln. Bei dem Binnengewässer kann es sich insbesondere um ein Fließgewässer, wie beispielsweise einen Strom (sehr großes Fließgewässer, welches in ein Meer mündet), einen Fluss (großes Fließgewässer), einen Bach (kleines Fließgewässer), einen Kanal (Wasserlauf mit künstlich hergestelltem Wasserbett), einen Höhlenfluss (Fließgewässer in einer Wasserhöhle), Kluftwasser, Wasserleitungen (künstliche Gewässer) oder um groß dimensionierte Bauwerke der Wasserver- und/oder -entsorgung (künstliche Gewässer), oder um ein Stillgewässer, wie beispielsweise einen See (größere Wasseransammlung), einen Stausee (künstliches Gewässer), einen Weiher (kleines und mäßig tiefes Gewässer ohne Zu- und Abfluss), einen Teich (kleines und mäßig tiefes Gewässer mit Zu- und Abfluss (künstliches Gewässer), einen Tümpel (regelmäßig austrocknendes Gewässer), eine Pfütze (kurzzeitiges stehendes Wasser), einen Höhlensee, oder eine Zisterne (künstliches Gewässer) handeln.

Unter dem Ausdruck "Süßwasser" soll im Sinne der vorliegenden Erfindung Wasser verstanden werden, welches unabhängig von seinem Aggregatzustand keine Salze oder einen Salzgehalt (sogenannte Salinität) < (gesprochen: kleiner) 0,1 % (Massenanteil) aufweist.

Unter dem Ausdruck "Salzwasser" soll im Sinne der vorliegenden Erfindung Wasser mit einem Salzgehalt (Salinität) von wenigstens 1 % (Massenanteil) verstanden werden.

Unter dem Ausdruck "Meerwasser" soll im Sinne der vorliegenden Erfindung Wasser mit einem Salzgehalt (Salinität), insbesondere durchschnittlichen Salzgehalt, von 3,5 % (Massenanteil) verstanden werden.

Unter dem Ausdruck "Brackwasser" soll im Sinne der vorliegenden Erfindung See- oder Meerwasser mit einem Salzgehalt (Salinität) von 0,1 % bis < 1 % (Massenanteil) verstanden werden.

Unter dem Ausdruck "Meer" sollen im Sinne der vorliegenden Erfindung miteinander verbundene Gewässer der Erde, welche die Kontinente umgeben, verstanden werden, einschließlich der sogenannten Nebenmeere, welche von den freien Meeren mehr oder wenig abgetrennt sind. Beispiele für Nebenmeere sind das Randmeer (Trennung durch Inselketten oder Meeresschwellen), Mittelmeer (Trennung durch Inselketten, Festland oder Meeresschwellen) sowie das Binnenmeer (Verbindung durch eine Meerenge).

Unter dem Ausdruck "Hybridkieselgel" soll im Sinne der vorliegenden Erfindung ein Gel, insbesondere ein makromolekulares Gel, mit Silizium-Sauerstoff-Bindungen und Silizium-Kohlenstoff-Bindungen verstanden werden. Aufgrund der Anwesenheit von "anorganischen" Siliziumbindungen (Silizium-Sauerstoff-Bindungen und/oder Silizium-Sauerstoff-SiliziumBindungen) und "organischen" Siliziumbindungen (Silizium-Kohlenstoff-Bindungen) kann ein derartiges Hybridkieselgel auch als anorganisch-organisches Hybridkieselgel bezeichnet werden.

Unter dem Ausdruck "Einschluss- und/oder Inkalationsverbindung" soll im Sinne der vorliegenden Erfindung eine Verbindung oder ein System verstanden werden, welche/welches ein Hybridkieselgel und Mikroplastik-Partikel, insbesondere agglomerierte Mikroplastik-Partikel, aufweist, wobei das Hybridkieselgel durch Umsetzung eines Alkyltrichlorsilans und/oder Silsesquioxans, insbesondere eines erfindungsgemäß vorgesehenen Alkyltrichlorsilans und/oder Silsesquioxans, in Wasser oder einem Gewässer gebildet oder hergestellt ist und wobei das Hybridkieselgel die Mikroplastik-Partikel, insbesondere die agglomerierten Mikroplastik-Partikel, wenigstens teilweise, insbesondere nur teilweise oder vollständig, einschließt oder umgibt. Eine solche Einschluss- und/oder Inkalationsverbindung kann im Sinne der vorliegenden Erfindung auch als Agglomerationsverbindung oder -system bezeichnet werden, da die Einschluss- und/oder Inkalationsverbindung im Ergebnis, worauf im Folgenden noch näher eingegangen werden wird, eine Agglomeration von Mikroplastik-Partikeln beinhaltet.

Bei den Mikroplastik-Partikeln handelt es sich vorzugsweise um inerte, d.h. reaktionsträge, und/oder hydrophobe, d.h. wasserunlösliche, Mikroplastik-Partikel.

Die Mikroplastik-Partikel können grundsätzlich einen Durchmesser, insbesondere mittleren Durchmesser, von > (gesprochen: größer) 1 mm bis 5 mm (sogenannte große Mikroplastik-Partikel) und/oder einen Durchmesser, insbesondere mittleren Durchmesser, von 100 nm bis 1 mm (sogenannte kleine Mikroplastik-Partikel) aufweisen.

Der Durchmesser, insbesondere mittlere Durchmesser, von Mikroplastik-Partikeln kann beispielsweise mikroskopisch oder rasterelektronenmikroskopisch, insbesondere mittels ESEM (Environmental Scanning Electron Microscope), bestimmt werden.

Die Erfindung basiert auf dem überraschenden Befund, dass Silsesquioxane zur Entfernung oder Elimination von Mikroplastik-Partikeln aus Wasser und/oder einem Gewässer verwendet werden können. Dabei findet über die Alkylgruppen der Silsesquioxane mit besonderem Vorteil in einem ersten Schritt eine Lokalisation von in Wasser und/oder einem Gewässer verteilten Mikroplastik-Partikeln und in einem zweiten Schritt eine Agglomeration der lokalisierten Mikroplastik-Partikel statt.

Der Lokalisationsschritt basiert auf inert-inert (und mithin "adhäsiven") Wechselwirkungen, insbesondere Van-der-Waals-Wechselwirkungen und/oder hydrohoben Wechselwirkungen, zwischen der Alkylgruppe des Silsesquioxans und den Mikroplastik-Partikeln, insbesondere der Oberfläche der Mikroplastik-Partikel. Im Zuge des Lokalisationsschrittes kommt es zu einer Ansammlung/Adsorption von Silsesquioxanmolekülen auf der Oberfläche der Mikroplastik-Partikel, wodurch die Voraussetzungen für eine anschließende Agglomeration der lokalisierten Mikroplastik-Partikel geschaffen werden. Durch inert-inert Wechselwirkungen, insbesondere Van-der-Waals-Wechselwirkungen und/oder hydrohobe Wechselwirkungen, zwischen den Silsesquioxanmolekülen lokalisierter Mikroplastik-Partikel wird deren Agglomeration induziert und insbesondere unterstützt. Die auf diese Weise lokalisierten und insbesondere agglomerierten Mikroplastik-Partikel werden sodann durch die Ausbildung eines Hybridkieselgels wenigstens teilweise, insbesondere nur teilweise oder vollständig, eingeschlossen, wodurch eine Dismigration und/oder Deagglomeration und/oder Leaching der Mikroplastik-Partikel verhindert werden/wird. Der Einschluss der Mikroplastik-Partikel kann dabei in vorteilhafter Weise mit einer weiteren Agglomeration der Mikroplastik-Partikel einhergehen.

Die Ausbildung des Hybridkieselgels basiert auf einer Hydrolyse des Silsesquioxans in Wasser und/oder einem Gewässer und einer anschließenden Kondensationsreaktion, insbesondere nach Art eines Sol-Gel-Prozesses.

Das schlussendlich in Wasser und/oder einem Gewässer entstehende Reaktionsprodukt kann als Einschluss- und/oder Inkalationsverbindung bezeichnet werden, wobei das Hybridkieselgel die Mikroplastik-Partikel, insbesondere die agglomerierten Mikroplastik-Partikel, wenigstens teilweise, insbesondere nur teilweise oder vollständig, einschließt oder umgibt. Die erhaltenen Einschlussverbindungen und mithin die darin eingeschlossenen Mikroplastik-Partikel, insbesondere agglomerierte Mikroplastik-Partikel, können anschließend kostengünstig und effizient aus dem Wasser und/oder dem Gewässer entfern werden, beispielsweise mittels einfachen Filtrationsmethoden, wie beispielsweise Rechen- und/oder Sandfang in einer Abwasserbehandlungsanlage. Die Einschlussverbindungen können dabei, abhängig von der Reaktivität des Silsesquioxans und/oder der Reaktions- oder Kontaktzeit, variable Partikeldurchmesser, insbesondere variable mittlere Partikeldurchmesser, beispielsweise in einem Bereich von 1 cm bis 6 cm, aufweisen. Die Einschlussverbindungen können nach ihrer Entfernung aus dem Wasser und/oder dem Gewässer, sofern gewünscht, aufgeschlossen und qualitativ und/oder quantitativ analysiert und/oder die darin enthaltenen Mikroplastik-Partikel, insbesondere agglomerierten Mikroplastik-Partikel, einer Wiederverwertung zugeführt werden, beispielsweise thermische Zersetzung (Pyrolyse) und/oder Einsatz als Füllmaterial. Ein weiterer Vorteil der Einschlussverbindungen besteht in ihrer ökotoxikologischen Unbedenklichkeit.

Im Hinblick auf die in den vorherigen Absätzen beschriebenen Prozesse, welche der Entfernung von Mikroplastik-Partikeln aus Wasser und/oder einem Gewässer zugrunde liegen, hat sich weiterhin als insbesondere überraschend herausgestellt, dass die erfindungsgemäß vorgesehenen Silsesquioxane einerseits über eine (insbesondere aufgrund eines von der Alkylgruppe induzierten positiven Effektes, sogenannter +I-Effekt) ausreichende Anfangsstabilität in Wasser und/oder einem Gewässer verfügen, damit die für einen erfolgreichen Einschluss der Mikroplastik-Partikel vorgreiflichen Lokalisations- und/oder Agglomerationsschritte ablaufen können, und andererseits über eine in Wasser und/oder einem Gewässer ausreichende Reaktivität verfügen, damit ein Einschluss der Mikroplastik-Partikel aufgrund der Ausbildung eines Hybridkieselgels stattfinden kann, wodurch im Ergebnis eine Dismigration und/oder Deagglomeration und/oder Leaching der Mikroplastik-Partikel verhindert werden/wird.

Das Silsesquioxan gemäß Formel II kann insbesondere zur Behandlung, bevorzugt Reinigung, kommunaler Abwässer verwendet werden.

Daneben kann das Silsesquioxan gemäß Formel II auch insbesondere zur Behandlung, bevorzugt Reinigung, industrieller Abwässer verwendet werden. Derartige Abwässer sind häufig durch einen extremen pH- Wert charakterisiert. Da sich der für die Ausbildung einer (makromolekularen) Hybridkieselgelstruktur verantwortliche Prozess, insbesondere Sol-Gel-Prozess, jedoch sowohl unter sauren pH-Wert-Bedingungen als auch unter alkalischen pH-Wert-Bedingungen katalysieren lässt, ist dies für eine Abtrennung von Mikroplastik-Partikel aus industriellen Abwässern unerheblich.

Wie bereits erwähnt, handelt es sich bei dem erfindungsgemäß vorgesehenen Silsesquioxan vorzugsweise um ein käfigförmiges Silsesquioxan, d.h. um ein Silsesquioxan mit einer Käfigstruktur. Durch eine Käfigstruktur kann eine Lokalisation von Mikroplastik-Partikeln in Wasser und/oder einem Gewässer und mithin deren Entfernung aus Wasser und/oder einem Gewässer zusätzlich begünstigt werden.

Ein weiterer Vorteil bei der Verwendung eines erfindungsgemäß vorgesehenen Silsesquioxans besteht darin, dass Silsesquioxane in Wasser aufgrund einer verlangsamten Reaktionskinetik im Vergleich zu Alkyltrichlorsilanen weniger reaktiv sind, wodurch eine bessere Reaktivitätskontrolle und mithin ein noch besseres Einschlussverhalten gegenüber Mikroplastik-Partikeln erreicht werden kann. Weiterhin weisen die erfindungsgemäß vorgesehenen Silsesquioxane gegenüber Alkyltrichlorsilanen eine verbesserte Mindesthaltbarkeit auf, wodurch auch größere Mengen an Silsesquioxanen zum Einsatz kommen können.

Weiterhin ist von Vorteil, dass die erfindungsgemäß vorgesehenen Silsesquioxane ökotoxikologisch unbedenklich einzustufen sind. Dadurch sind insbesondere bei einer Anwendung in einer Kläranlage keine erhöhten Sicherheitsstandards zu beachten.

Ein weiterer genereller Vorteil bei Verwendung eines Silsesquioxans besteht darin, dass Wasseranteile in möglichen Anwendungsformen keinen störenden Einfluss ausüben. Eine partielle Hydrolyse oder Präpolymerisation des Silsesquioxans zu einem Hybridkieselgel kann sogar im Hinblick auf ein Einschlussverhalten gegenüber Mikroplastik-Partikeln förderlich sein. Sofern eine partielle Hydrolyse bzw. Präpolymerisation nicht gewünscht ist, kann das Silsesquioxan wasserfrei oder im Wesentlichen wasserfrei verpackt und entsprechend wasserfrei bzw. im Wesentlichen wasserfrei zur Anwendung kommen.

Weiterhin kann es sich dem Silsesquioxan grundsätzlich um ein homofunktionalisiertes Silsesquioxan, d.h. um ein Silsesquioxan, bei welchem die Siliziumatome jeweils mit einer gleichen Alkylgruppe kovalent verknüpft sind, oder um ein heterofunktionalisiertes Silsesquioxan, d.h. um ein Silsesquioxan mit wenigstens zwei unterschiedlichen Alkylgruppen, handeln.

In Ausgestaltung der Erfindung handelt es sich bei dem Silsesquioxan um ein ungeträgertes Silsesquioxan, d.h. um ein Silsesquioxan, welches nicht mit einem Trägermaterial, wie beispielsweise Aktivkohle oder einem Polyurethanschwamm, verbunden ist oder, anders ausgedrückt, welches frei von einem Trägermaterial, wie beispielsweise Aktivkohle oder einem Polyurethanschwamm, ist. Insbesondere kann es sich beim Silsesquioxan um ein Silsesquioxan handeln, welches nicht auf der Oberfläche eines Trägermaterials, insbesondere weder auf einer äußeren Oberfläche noch auf einer inneren Oberfläche eines Trägermaterials, gebunden ist.

In weiterer Ausgestaltung der Erfindung ist R, d.h. die Alkylgruppe R in der Formel II, eine Alkylgruppe mit 1 Kohlenstoffatom bis 16 Kohlenstoffatomen, insbesondere 3 Kohlenstoffatomen bis 14 Kohlenstoffatomen, vorzugsweise 4 Kohlenstoffatomen bis 8 Kohlenstoffatomen.

Besonders bevorzugt ist R, d.h. die Alkylgruppe R in der Formel II, eine Alkylgruppe mit wenigstens 4 Kohlenstoffatomen. Insoweit hat sich gezeigt, dass ein durch einen solchen Alkylrest erzeugter positiver induktiver Effekt (+I-Effekt) besonders gut in der Lage ist, einem entsprechenden Silsesquioxan eine in Wasser und/oder einem Gewässer ausreichende Anfangsstabilität zu verleihen, damit die vor dem Einschluss von Mikroplastik-Partikeln ablaufenden Lokalisations- und/oder Agglomerationsvorgänge in ausreichendem Umfang stattfinden können.

Bevorzugt ist R, d.h. die Alkylgruppe R in der Formel II, eine lineare Alkylgruppe, insbesondere mit wenigstens 4 Kohlenstoffatomen. Der im vorherigen Absatz erwähnte Vorteil gilt entsprechend.

Alternativ kann es bevorzugt sein, dass R, d.h. die Alkylgruppe R in der Formel II, eine verzweigte Alkylgruppe, insbesondere eine monoverzweigte oder mehrfach verzweigte Alkylgruppe, ist. Bevorzugt weist die verzweigte Alkylgruppe wenigstens 4 Kohlenstoffatome auf. Eine verzweigte Alkylgruppe hat gegenüber einer linearen Alkylgruppe den zusätzlichen Vorteil, dass aufgrund einer stärkeren sterischen Abschirmung des Siliziumatoms sowie eines aufgrund der Verzweigung der Alkylgruppe stärkeren positiven induktiven Effekts die Anfangsstabilität eines entsprechenden Silsesquioxans in Wasser und/oder einem Gewässer zusätzlich erhöht werden kann, wodurch die für den Einschluss von Mikroplastik-Partikeln erforderlichen Prozesse der Lokalisation und/oder Agglomeration von Mikroplastik-Partikeln besonders gut ablaufen können.

In weiterer Ausgestaltung der Erfindung ist R, d.h. die Alkylgruppe R in der Formel II, ausgewählt aus der Gruppe bestehend aus n-Butylgruppe, Isobutylgruppe (2-Methylpropylgruppe), Hexylgruppe, Isohexylgruppe (4-Methylpentylgruppe), 2,4,4-Trimethylpentylgruppe, n-Octylgruppe, 6-Methylheptylgruppe, Nonylgruppe, Decylgruppe, Dodecylgruppe, Tetradecylgruppe und Hexadecylgruppe.

Insbesondere kann R, d.h. die Alkylgruppe R in der Formel II, ausgewählt sein aus der Gruppe bestehend aus Hexylgruppe, Isohexylgruppe (4-Methylpentylgruppe), 2,4,4-Trimethylpentylgruppe, n-Octylgruppe, 6-Methylheptylgruppe, Nonylgruppe, Decylgruppe, Dodecylgruppe, Tetradecylgruppe, Hexadecylgruppe, Isomere davon und Isomerenmischungen davon.

Bevorzugt ist R, d.h. die Alkylgruppe R in der Formel II, ausgewählt aus der Gruppe bestehend aus n-Butylgruppe, Isobutylgruppe (2-Methylpropylgruppe), n-Hexylgruppe, 2-Methylpentylgruppe, 3-Methylpentylgruppe, 2,2-Dimethylbutylgruppe, 2,3-Dimethylbutylgruppe, n-Octylgruppe, 2-Methylheptylgruppe, 3-Methylheptylgruppe, 4-Methylheptylgruppe, 2,2-Dimethylhexylgruppe, 2,3-Dimethylhexylgruppe, 2,4-Dimethylhexylgruppe, 2,5-Dimethylhexylgruppe, 3,3-Dimethylhexylgruppe, 3,4-Dimethylhexylgruppe, 3-Ethylhexylgruppe, 2,2,3-Trimethylpentylgruppe, 2,2,4-Trimethylpentylgruppe, 2,4,4-Trimethylpentylgruppe, 2,3,3-Trimethylpentylgruppe, 2,3,4-Trimethylpentylgruppe, 3-Ethyl-2-Methylpentylgruppe, 3-Ethyl-3-Methylpentylgruppe und 2,2,3,3-Tetramethylbutylgruppe.

In weiterer Ausgestaltung der Erfindung ist R, d.h. die Alkylgruppe R in der Formel II, ausgewählt aus der Gruppe bestehend aus n-Butylgruppe, Isobutylgruppe, n-Octylgruppe und 2,4,4-Trimethylpentylgruppe.

Insbesondere kann R, d.h. die Alkylgruppe R in der Formel II, ausgewählt sein aus der Gruppe bestehend aus n-Butylgruppe, Isobutylgruppe, n-Octylgruppe, 2,4,4-Trimethylpentylgruppe, Isomere davon und Isomerenmischungen davon.

Bevorzugt ist R, d.h. die Alkylgruppe R in der Formel II, ausgewählt aus der Gruppe bestehend aus n-Butylgruppe, Isobutylgruppe, n-Octylgruppe, 2-Methylheptylgruppe, 3-Methylheptylgruppe, 4-Methylheptylgruppe, 2,2-Dimethylhexylgruppe, 2,3-Dimethylhexylgruppe, 2,4-Dimethylhexylgruppe, 2,5-Dimethylhexylgruppe, 3,3-Dimethylhexylgruppe, 3,4-Dimethylhexylgruppe, 3-Ethylhexylgruppe, 2,2,3-Trimethylpentylgruppe, 2,2,4-Trimethylpentylgruppe, 2,4,4-Trimethylpentylgruppe, 2,3,3-Trimethylpentylgruppe, 2,3,4-Trimethylpentylgruppe, 3-Ethyl-2-Methylpentylgruppe, 3-Ethyl-3-Methylpentylgruppe und 2,2,3,3-Tetramethylbutylgruppe.

Besonders bevorzugt ist R, d.h. die Alkylgruppe R in der Formel II, eine n-Butylgruppe. Mit anderen Worten ist es erfindungsgemäß besonders bevorzugt, wenn es sich bei dem Silsesquioxan gemäß Formel II um ein mit n-Butylgruppen funktionalisiertes Silsesquioxan handelt.

Weiterhin ist es besonders bevorzugt, wenn R, d.h. die Alkylgruppe R in der Formel II, eine Isobutylgruppe ist. Mit anderen Worten ist es erfindungsgemäß weiterhin besonders bevorzugt, wenn es sich bei dem Silsesquioxan gemäß Formel II um ein mit Isobutylgruppen (2-Methylpropylgruppen) funktionalisiertes Silsesquioxan handelt.

Weiterhin ist es besonders bevorzugt, wenn R, d.h. die Alkylgruppe R in der Formel II, eine n-Octylgruppe ist. Mit anderen Worten ist es erfindungsgemäß weiterhin besonders bevorzugt, wenn es sich bei dem Silsesquioxan gemäß Formel II um ein mit n-Octylgruppen funktionalisiertes Silsesquioxan handelt.

Weiterhin ist es besonders bevorzugt, wenn R, d.h. die Alkylgruppe R in der Formel II, eine 2,4,4-Trimethylpentylgruppe ist. Mit anderen Worten ist es erfindungsgemäß weiterhin besonders bevorzugt, wenn es sich bei dem Silsesquioxan gemäß Formel II um ein mit 2,4,4-Trimethylpentylgruppen funktionalisiertes Silsesquioxan handelt.

In weiterer Ausgestaltung der Erfindung bedeutet n in der Formel II eine ganze Zahl von 4 bis 16, insbesondere 6 bis 14, bevorzugt 6 bis 12. Dadurch können insbesondere gute inert-inert Wechselwirkungen, insbesondere Van-der-Waals-Wechselwirkungen und/oder hydrophobe Wechselwirkungen, zu Mikroplastik-Partikel ausgebildet werden.

In weiterer Ausgestaltung der Erfindung bedeutet n in der Formel II die ganze Zahl 6, 8, 10 oder 12. Mit anderen Worten ist es bevorzugt, wenn es sich bei dem Silsesquioxan gemäß Formel II um ein Hexasilsesquioxan, Octasilsesquioxan, Decasilsesquioxan oder Dodecasilsesquioxan handelt. Dadurch können besonders gute inert-inert Wechselwirkungen, insbesondere Van-der-Waals-Wechselwirkungen und/oder hydrophobe Wechselwirkungen, zu Mikroplastik-Partikel ausgebildet werden.

In weiterer Ausgestaltung der Erfindung weist das Silsesquioxan die nachstehende Formel III 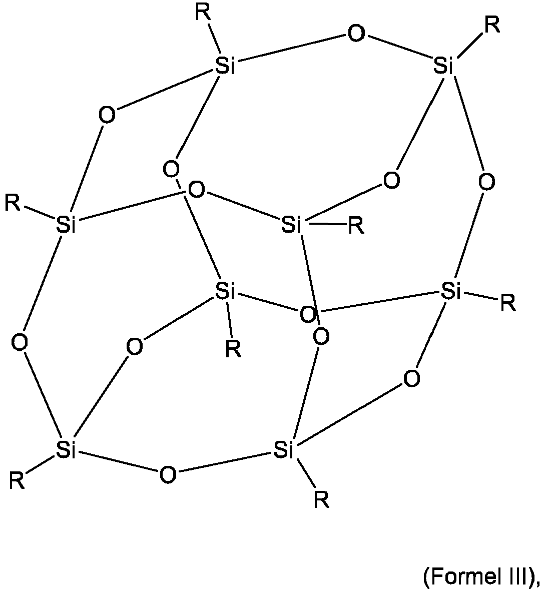 wobei R eine Alkylgruppe, Si ein Siliziumatom und O ein Sauerstoffatom bedeuten.

Bevorzugt ist die Alkylgruppe R (in der Formel III) eine Alkylgruppe mit 1 Kohlenstoffatom bis 16 Kohlenstoffatomen, insbesondere 3 Kohlenstoffatomen bis 14 Kohlenstoffatomen, vorzugsweise 4 Kohlenstoffatomen bis 8 Kohlenstoffatomen.

Weiterhin ist es bevorzugt, wenn die Alkylgruppe R (in der Formel III) eine Alkylgruppe, insbesondere eine lineare oder verzweigte, insbesondere monoverzweigte oder mehrfach verzweigte, Alkylgruppe, vorzugsweise mit wenigstens 4 Kohlenstoffatomen, ist.

Weiterhin ist es bevorzugt, wenn die Alkylgruppe R (in der Formel III) ausgewählt ist aus der Gruppe bestehend aus n-Butylgruppe, Isobutylgruppe (2-Methylpropylgruppe), Hexylgruppe, Isohexylgruppe (4-Methylpentylgruppe), 2,4,4-Trimethylpentylgruppe, n-Octylgruppe, 6-Methylheptylgruppe, Nonylgruppe, Decylgruppe, Dodecylgruppe, Tetradecylgruppe und Hexadecylgruppe.

Weiterhin ist es bevorzugt, wenn die Alkylgruppe R (in der Formel III) ausgewählt ist aus der Gruppe bestehend aus n-Butylgruppe, Isobutylgruppe, n-Octylgruppe und 2,4,4-Trimethylpentylgruppe. Mit anderen Worten ist es bevorzugt, wenn es sich bei dem Silsesquioxan der vorliegenden Erfindung um ein Octa-n-butyl-silsesquioxan, Octa-isobutyl-silsesquioxan (Octa-2-methylpropyl-silsesquioxan), Octa-n-octyl-silsesquioxan oder Octa-2,4,4-trimethylpentyl-silsesquioxan handelt.

Bezüglich weiterer Merkmale und Vorteile, insbesondere in Bezug auf die Alkylgruppe R (in der Formel III), wird vollständig auf die bisherige Beschreibung Bezug genommen. Die dort insoweit insbesondere in Bezug auf die Alkylgruppe R gemachten Ausführungen gelten sinngemäß auf für das Silsesquioxan gemäß Formel III.

In weiterer Ausgestaltung der Erfindung umfasst die Alkylgruppe in der Formel II und/oder in der Formel III wenigstens zwei verschiedene Alkylgruppen, insbesondere ausgewählt aus der Gruppe bestehend aus n-Butylgruppe, Isobutylgruppe (2-Methylpropylgruppe), Hexylgruppe, Isohexylgruppe (4-Methylpentylgruppe), 2,4,4-Trimethylpentylgruppe, n-Octylgruppe, 6-Methylheptylgruppe, Nonylgruppe, Decylgruppe, Dodecylgruppe, Tetradecylgruppe und Hexadecylgruppe. Mit anderen Worten kann es erfindungsgemäß weiterhin bevorzugt sein, wenn es sich bei dem Silsesquioxan gemäß Formel II und/oder Formel III um ein Silsesquioxan mit wenigstens zwei unterschiedlichen Alkylgruppen handelt (sogenanntes heterofunktionalisiertes Silsesquioxan), wobei die Alkylgruppen insbesondere ausgewählt sind aus der Gruppe bestehend aus n-Butylgruppe, Isobutylgruppe (2-Methylpropylgruppe), Hexylgruppe, Isohexylgruppe (4-Methylpentylgruppe), 2,4,4-Trimethylpentylgruppe, n-Octylgruppe, 6-Methylheptylgruppe, Nonylgruppe, Decylgruppe, Dodecylgruppe, Tetradecylgruppe und Hexadecylgruppe.

In weiterer Ausgestaltung der Erfindung handelt es sich bei dem Silsesquioxan um einen Reinstoff, d.h. um einen einzigen Typ eines Silsesquioxans, oder um ein Gemisch, d.h. eine Mischung, verschiedener Silsesquioxane. Bei dem Silsesquioxan kann es sich insbesondere um ein Gemisch von isomeren Silsesquioxanen, bevorzugt um ein Gemisch von verzweigten isomeren Silsesquioxanen, handeln. Dadurch kann mit besonderem Vorteil auf zeit- und kostenintensive Aufreinigungsmaßnahmen verzichtet werden. Insbesondere kann es sich bei dem Silsesquioxan um ein Gemisch bzw. eine Mischung von wenigstens zwei verschiedenen Silsesquioxanen handeln, welche vorzugsweise ausgewählt sind aus der Gruppe bestehend aus Octa-n-butyl-silsesquioxan, Octa-isobutyl-silsesquioxan (Octa-2-methylpropyl-silsesquioxan), Octa-n-octyl-silsesquioxan und Octa-2,4,4-trimethylpentyl-silsesquioxan. Bezüglich weiterer geeigneter Silsesquioxane sei vollständig auf die bisherige Beschreibung Bezug genommen.

In weiterer Ausgestaltung der Erfindung weisen die Mikroplastik-Partikel einen Kunststoff auf oder bestehen aus einem Kunststoff, welcher ausgewählt ist aus der Gruppe bestehend aus Polyethylen (PE) wie Polyethylen niedriger Dichte (LDPE) und/oder Polyethylen hoher Dichte (HDPE), Polypropylen (PP), Polystyrol (PS), Polyvinylchlorid (PVC), Polyurethan (PU), Polyamid (PA), Polycarbonat (PC), Polytetrafluorethylen (PTFE), Polyoxymethylen (PMO), Acrylnitril-Butadien-Styrol-Copolymer (ABS), Polyethylenterephthalat (PET), Polymethylmethacrylat (PMMA), Polyacrylnitril (PAN), Copolymere von wenigstens zwei der genannten Kunststoffe und Kombinationen, insbesondere Mischungen (Blends), von wenigstens zwei der genannten Kunststoffe.

In weiterer Ausgestaltung der Erfindung weisen die Mikroplastik-Partikel einen Durchmesser, insbesondere mittleren Durchmesser, von 100 nm bis 5 mm, insbesondere 10 µm bis 5 mm, bevorzugt 100 µm bis 1 mm, auf.

Gemäß einem zweiten Aspekt betrifft die Erfindung ein Verfahren zum Entfernen von Mikroplastik-Partikeln aus Wasser, insbesondere Abwasser und/oder Betriebswasser und/oder Sickerwasser und/oder Trinkwasser, und/oder einem Gewässer.

Das Verfahren weist folgende Schritte auf:
a) Dosieren oder Zugeben eines Silsesquioxans der nachstehenden Formel II

   [RSiO_{3/2}]ₙ (Formel II),

   wobei
   R eine Alkylgruppe, Si ein Siliziumatom, O ein Sauerstoffatom und n eine ganze Zahl bedeuten,
   zu einem mikroplastikpartikelhaltigen Wasser, d.h. einem Wasser, welches Mikroplastik-Partikel, insbesondere inerte und/oder hydrophobe Mikroplastik-Partikel, enthält, und/oder einem mikroplastikpartikelhaltigen Gewässer, d.h. einem Gewässer, welches Mikroplastik-Partikel, insbesondere inerte und/oder hydrophobe Mikroplastik-Partikel, enthält, und
b) Entfernen von nach Zugeben des Silsesquioxans entstandenen Einschlussverbindungen aus dem Wasser und/oder dem Gewässer, wobei die Einschlussverbindungen jeweils ein Hybridkieselgel und Mikroplastik-Partikel, insbesondere agglomerierte Mikroplastik-Partikel, aufweisen, wobei das Hybridkieselgel durch Umsetzung des Silsesquioxans in dem Wasser und/oder Gewässer gebildet oder hergestellt ist und das Hybridkieselgel die Mikroplastik-Partikel, insbesondere die agglomerierten Mikroplastik-Partikel, wenigstens teilweise, insbesondere nur teilweise oder vollständig, einschließt oder umgibt.

Bei dem Silsesquioxan handelt es sich vorzugsweise um ein ungeträgertes Silsesquioxan, d.h. um ein Silsesquioxan, welches nicht mit einem Trägermaterial, wie beispielsweise Aktivkohle oder einem Polyurethanschwamm, verbunden ist oder, anders ausgedrückt, welches frei von einem Trägermaterial, wie beispielsweise Aktivkohle oder einem Polyurethanschwamm, ist. Insbesondere kann es sich beim Silsesquioxan um ein Silsesquioxan handeln, welches nicht auf der Oberfläche eines Trägermaterials, insbesondere weder auf einer äußeren Oberfläche noch auf einer inneren Oberfläche eines Trägermaterials, gebunden ist.

Weiterhin ist es bevorzugt, wenn R, d.h. die Alkylgruppe R in der Formel II, eine Alkylgruppe mit 1 Kohlenstoffatom bis 16 Kohlenstoffatomen, insbesondere 3 Kohlenstoffatomen bis 14 Kohlenstoffatomen, vorzugsweise 4 Kohlenstoffatomen bis 8 Kohlenstoffatomen, ist.

Weiterhin ist es bevorzugt, wenn R, d.h. die Alkylgruppe R in der Formel II, eine Alkylgruppe mit wenigstens 4 Kohlenstoffatomen ist.

Weiterhin ist es bevorzugt, wenn R, d.h. die Alkylgruppe R in der Formel II, eine lineare Alkylgruppe, insbesondere mit wenigstens 4 Kohlenstoffatomen, ist.

Weiterhin ist es bevorzugt, wenn R, d.h. die Alkylgruppe R in der Formel II, eine verzweigte Alkylgruppe, insbesondere eine monoverzweigte oder mehrfach verzweigte Alkylgruppe, ist. Bevorzugt weist die verzweigte Alkylgruppe wenigstens 4 Kohlenstoffatome auf.

Weiterhin ist es bevorzugt, wenn R, d.h. die Alkylgruppe R in der Formel II, ausgewählt ist aus der Gruppe bestehend aus n-Butylgruppe, Isobutylgruppe (2-Methylpropylgruppe), Hexylgruppe, Isohexylgruppe (4-Methylpentylgruppe), 2,4,4-Trimethylpentylgruppe, n-Octylgruppe, 6-Methylheptylgruppe, Nonylgruppe, Decylgruppe, Dodecylgruppe, Tetradecylgruppe und Hexadecylgruppe.

Insbesondere kann R, d.h. die Alkylgruppe R in der Formel II, ausgewählt sein aus der Gruppe bestehend aus Hexylgruppe, Isohexylgruppe (4-Methylpentylgruppe), 2,4,4-Trimethylpentylgruppe, n-Octylgruppe, 6-Methylheptylgruppe, Nonylgruppe, Decylgruppe, Dodecylgruppe, Tetradecylgruppe, Hexadecylgruppe, Isomere davon und Isomerenmischungen davon.

Bevorzugt ist R, d.h. die Alkylgruppe R in der Formel II, ausgewählt aus der Gruppe bestehend aus n-Butylgruppe, Isobutylgruppe (2-Methylpropylgruppe), n-Hexylgruppe, 2-Methylpentylgruppe, 3-Methylpentylgruppe, 2,2-Dimethylbutylgruppe, 2,3-Dimethylbutylgruppe, n-Octylgruppe, 2-Methylheptylgruppe, 3-Methylheptylgruppe, 4-Methylheptylgruppe, 2,2-Dimethylhexylgruppe, 2,3-Dimethylhexylgruppe, 2,4-Dimethylhexylgruppe, 2,5-Dimethylhexylgruppe, 3,3-Dimethylhexylgruppe, 3,4-Dimethylhexylgruppe, 3-Ethylhexylgruppe, 2,2,3-Trimethylpentylgruppe, 2,2,4-Trimethylpentylgruppe, 2,4,4-Trimethylpentylgruppe, 2,3,3-Trimethylpentylgruppe, 2,3,4-Trimethylpentylgruppe, 3-Ethyl-2-Methylpentylgruppe, 3-Ethyl-3-Methylpentylgruppe und 2,2,3,3-Tetramethylbutylgruppe.

Weiterhin ist es bevorzugt, wenn R, d.h. die Alkylgruppe R in der Formel II, ausgewählt ist aus der Gruppe bestehend aus n-Butylgruppe, Isobutylgruppe, n-Octylgruppe und 2,4,4-Trimethylpentylgruppe.

Insbesondere kann R, d.h. die Alkylgruppe R in der Formel II, ausgewählt sein aus der Gruppe bestehend aus n-Butylgruppe, Isobutylgruppe, n-Octylgruppe, 2,4,4-Trimethylpentylgruppe, Isomere davon und Isomerenmischungen davon.

Bevorzugt ist R, d.h. die Alkylgruppe R in der Formel II, ausgewählt aus der Gruppe bestehend aus n-Butylgruppe, Isobutylgruppe, n-Octylgruppe, 2-Methylheptylgruppe, 3-Methylheptylgruppe, 4-Methylheptylgruppe, 2,2-Dimethylhexylgruppe, 2,3-Dimethylhexylgruppe, 2,4-Dimethylhexylgruppe, 2,5-Dimethylhexylgruppe, 3,3-Dimethylhexylgruppe, 3,4-Dimethylhexylgruppe, 3-Ethylhexylgruppe, 2,2,3-Trimethylpentylgruppe, 2,2,4-Trimethylpentylgruppe, 2,4,4-Trimethylpentylgruppe, 2,3,3-Trimethylpentylgruppe, 2,3,4-Trimethylpentylgruppe, 3-Ethyl-2-Methylpentylgruppe, 3-Ethyl-3-Methylpentylgruppe und 2,2,3,3-Tetramethylbutylgruppe.

Weiterhin ist es bevorzugt, wenn n in der Formel II eine ganze Zahl von 4 bis 16, insbesondere 6 bis 14, bevorzugt 6 bis 12, bedeutet.

Insbesondere ist es bevorzugt, wenn n in der Formel II die ganze Zahl 6, 8, 10 oder 12 bedeutet.

Der Schritt a) kann grundsätzlich manuell, halbautomatisch oder (vollständig) automatisch durchgeführt werden. Bevorzugt wird der Schritt a) halbautomatisch oder (vollständig) automatisch durchgeführt.

Weiterhin ist es bevorzugt, wenn Schritt b) mittels Filtration, insbesondere mittels Rechen- oder Sandfang, vorgenommen wird.

Weiterhin ist es bevorzugt, wenn der Schritt a) und/oder der Schritt b) in einer Kläranlage, d.h. einer Abwasserbehandlungsanlage, insbesondere in einem Belebungsbecken und/oder einem Nachklärbecken davon, vorgenommen werden/wird.

Bei der Kläranlage bzw. Abwasserbehandlungsanlage kann es sich grundsätzlich um eine zentrale, d. h. stationäre, Kläranlage bzw. Abwasserbehandlungsanlage oder um eine dezentrale, d. h. mobile, Kläranlage bzw. Abwasserbehandlungsanlage, wie beispielsweise einen Container handeln.

Unter dem Ausdruck "Nachklärbecken" soll im Sinne der vorliegenden Erfindung eine Reinigungsstufe einer Kläranlage bzw. Abwasserbehandlungsanlage verstanden werden, welche üblicherweise zusammen mit einem Belebungsbecken, in welchem ein sogenannter Belebtschlamm durch Absetzen aus dem Abwasser abgetrennt wird, eine Prozesseinheit bildet.

Unter dem Ausdruck "Belebungsbecken" soll im Sinne der vorliegenden Erfindung eine Reinigungsstufe einer Kläranlage bzw. Abwasserbehandlungsanlage verstanden werden, in welcher Abwasserinhaltsstoffe (eines frischen Abwassers) durch Belüften eines mit Belebtschlamm versetzten Abwassers biotisch oxidativ abgebaut werden.

Unter dem Ausdruck "Belebtschlamm" soll im Sinne der vorliegenden Erfindung eine Ansammlung an Mikroorganismen verstanden werden, welche bei der aeroben biologischen Abwasserreinigung organische Stoffe abbauen. Der Belebtschlamm besteht vor allem aus Bakterien, Pilzen und Protozoen.

Weiterhin kann es bevorzugt sein, wenn der Schritt a) und/oder Schritt b) vor oder nach einem Umkehrosmoseschritt durchgeführt werden/wird.

Weiterhin kann es bevorzugt sein, wenn der Schritt a) und/oder Schritt b) vor oder nach einem Meersalzgewinnungsschritt durchgeführt werden/wird.

Weiterhin ist es bevorzugt, wenn vor Durchführen von Schritt a) und/oder während des Durchführens von Schritt a) das Wasser und/oder das Gewässer, insbesondere wenigstens abschnittsweise, bevorzugt nur abschnittsweise, in eine Drehbewegung versetzt werden/wird. Dadurch kann mit besonderem Vorteil eine für einen erfolgreichen Einschluss der Mikroplastik-Partikel vorgreifliche Lokalisation und/oder Aggregation der Mikroplastik-Partikel begünstigt werden.

Weiterhin ist es bevorzugt, wenn vor Durchführen von Schritt a) und/oder während des Durchführens von Schritt a) in dem Wasser und/oder dem Gewässer, insbesondere wenigstens abschnittsweise, bevorzugt nur abschnittsweise, ein Strudel erzeugt wird und das Silsesquioxan in einen Sogtrichter des Strudels zugegeben werden/wird. Auf diese Weise kann eine für einen erfolgreichen Einschluss der Mikroplastik-Partikel erforderliche Lokalisation und/oder Aggregation der Mikroplastik-Partikel besonders effektiv erzielt werden.

Bezüglich weiterer Merkmale und Vorteile des Verfahrens, insbesondere des Silsesquioxans, wird vollständig auf die im Rahmen des ersten Erfindungsaspekts gemachten Ausführungen Bezug genommen. Die dort im Übrigen gemachten Ausführungen gelten sinngemäß auch für das Verfahren gemäß zweitem Erfindungsaspekt.

Gemäß einem dritten Aspekt betrifft die Erfindung eine Einschlussverbindung welche ein Hybridkieselgel und Mikroplastik-Partikel, insbesondere agglomerierte Mikroplastik-Partikel, aufweist, wobei das Hybridkieselgel durch Umsetzung eines Silsesquioxans der nachstehenden Formel II

[RSiO_{3/2}]ₙ (Formel II),

wobei
R eine Alkylgruppe, Si ein Siliziumatom, O ein Sauerstoffatom und n eine ganze Zahl bedeuten,
in Wasser und/oder einem Gewässer gebildet oder hergestellt ist und das Hybridkieselgel die Mikroplastik-Partikel, insbesondere die agglomerierten Mikroplastik-Partikel, wenigstens teilweise, insbesondere nur teilweise oder vollständig, einschließt oder umgibt.

Weiterhin ist es bevorzugt, wenn R, d.h. die Alkylgruppe R in der Formel II, eine Alkylgruppe mit 1 Kohlenstoffatom bis 16 Kohlenstoffatomen, insbesondere 3 Kohlenstoffatomen bis 14 Kohlenstoffatomen, vorzugsweise 4 Kohlenstoffatomen bis 8 Kohlenstoffatomen, ist.

Weiterhin ist es bevorzugt, wenn R, d.h. die Alkylgruppe R in der Formel II, eine Alkylgruppe mit wenigstens 4 Kohlenstoffatomen ist.

Weiterhin ist es bevorzugt, wenn R, d.h. die Alkylgruppe R in der Formel II, eine lineare Alkylgruppe, insbesondere mit wenigstens 4 Kohlenstoffatomen, ist.

Weiterhin ist es bevorzugt, wenn R, d.h. die Alkylgruppe R in der Formel II, eine verzweigte Alkylgruppe, insbesondere eine monoverzweigte oder mehrfach verzweigte Alkylgruppe, ist. Bevorzugt weist die verzweigte Alkylgruppe wenigstens 4 Kohlenstoffatome auf.

Weiterhin ist es bevorzugt, wenn R, d.h. die Alkylgruppe R in der Formel II, ausgewählt ist aus der Gruppe bestehend aus n-Butylgruppe, Isobutylgruppe (2-Methylpropylgruppe), Hexylgruppe, Isohexylgruppe (4-Methylpentylgruppe), 2,4,4-Trimethylpentylgruppe, n-Octylgruppe, 6-Methylheptylgruppe, Nonylgruppe, Decylgruppe, Dodecylgruppe, Tetradecylgruppe und Hexadecylgruppe.

Weiterhin ist es bevorzugt, wenn R, d.h. die Alkylgruppe R in der Formel II, ausgewählt ist aus der Gruppe bestehend aus n-Butylgruppe, Isobutylgruppe, n-Octylgruppe und 2,4,4-Trimethylpentylgruppe.

Weiterhin ist es bevorzugt, wenn n in der Formel II eine ganze Zahl von 4 bis 16, insbesondere 6 bis 14, bevorzugt 6 bis 12, bedeutet.

Insbesondere ist es bevorzugt, wenn n in der Formel II die ganze Zahl 6, 8, 10 oder 12 bedeutet.

Die Einschlussverbindung kann, abhängig von der Reaktivität des Silsesquioxans und/oder abhängig von der Reaktions- oder Kontaktzeit, variable Partikeldurchmesser, insbesondere variable mittlere Partikeldurchmesser, aufweisen. Beispielsweise kann die Einschlussverbindung einen Partikeldurchmesser, insbesondere einen mittleren Partikeldurchmesser, von 1 cm bis 6 cm aufweisen.

Bezüglich weiterer Merkmale und Vorteile der Einschlussverbindung wird ebenfalls auf die bisherige Beschreibung, insbesondere auf die im Rahmen des ersten Erfindungsaspekts gemachten Ausführungen, Bezug genommen. Die dort im Übrigen gemachten Ausführungen gelten sinngemäß auch für die Einschlussverbindung gemäß drittem Erfindungsaspekt.

Gemäß einem vierten Aspekt betrifft die Erfindung die Verwendung eines Kits zum Entfernen von Mikroplastik-Partikeln aus Wasser, insbesondere Abwasser und/oder Betriebswasser und/oder Sickerwasser und/oder Trinkwasser, und/oder einem Gewässer.

Das Kit weist Folgendes auf:
- ein Silsesquioxan der nachstehenden Formel II

   [RSiO_{3/2}]ₙ (Formel II)

   , wobei
   R eine Alkylgruppe, Si ein Siliziumatom, O ein Sauerstoffatom und n eine ganze Zahl bedeuten.

Zusätzlich weist das Kit, insbesondere räumlich getrennt von dem Silsesquioxan gemäß Formel II, wenigstens eine weitere Komponente auf. Die weitere Komponente ist vorzugsweise ein Adsorptionsmittel, insbesondere ausgewählt aus der Gruppe bestehend aus Aktivkohle, Calcium-Silica-Hydrate, Polonit, Gesteine und Kombinationen von wenigstens zwei der genannten Adsorptionsmittel.

Es ist bevorzugt, wenn R, d.h. die Alkylgruppe R in der Formel II, eine Alkylgruppe mit 1 Kohlenstoffatom bis 16 Kohlenstoffatomen, insbesondere 3 Kohlenstoffatomen bis 14 Kohlenstoffatomen, vorzugsweise 4 Kohlenstoffatomen bis 8 Kohlenstoffatomen, ist.

Weiterhin ist es bevorzugt, wenn R, d.h. die Alkylgruppe R in der Formel II, eine Alkylgruppe mit wenigstens 4 Kohlenstoffatomen ist.

Weiterhin ist es bevorzugt, wenn R, d.h. die Alkylgruppe R in der Formel II, eine lineare Alkylgruppe, insbesondere mit wenigstens 4 Kohlenstoffatomen, ist.

Weiterhin ist es bevorzugt, wenn R, d.h. die Alkylgruppe R in der Formel II, eine verzweigte Alkylgruppe, insbesondere eine monoverzweigte oder mehrfach verzweigte Alkylgruppe, ist. Bevorzugt weist die verzweigte Alkylgruppe wenigstens 4 Kohlenstoffatome auf.

Weiterhin ist es bevorzugt, wenn R, d.h. die Alkylgruppe R in der Formel II, ausgewählt ist aus der Gruppe bestehend aus n-Butylgruppe, Isobutylgruppe (2- Methylpropylgruppe), Hexylgruppe, Isohexylgruppe (4-Methylpentylgruppe), 2,4,4-Trimethylpentylgruppe, n-Octylgruppe, 6-Methylheptylgruppe, Nonylgruppe, Decylgruppe, Dodecylgruppe, Tetradecylgruppe und Hexadecylgruppe.

Weiterhin ist es bevorzugt, wenn R, d.h. die Alkylgruppe R in der Formel II, ausgewählt ist aus der Gruppe bestehend aus n-Butylgruppe, Isobutylgruppe, n-Octylgruppe und 2,4,4-Trimethylpentylgruppe.

Weiterhin ist es bevorzugt, wenn n in der Formel II eine ganze Zahl von 4 bis 16, insbesondere 6 bis 14, bevorzugt 6 bis 12, bedeutet.

Insbesondere ist es bevorzugt, wenn n in der Formel II die ganze Zahl 6, 8, 10 oder 12 bedeutet.

Bezüglich weiterer Merkmale und Vorteile des Kits wird ebenfalls vollständig auf die bisherige Beschreibung, insbesondere auf die im Rahmen des ersten Erfindungsaspekts gemachten Ausführungen, Bezug genommen. Die dort im Übrigen gemachten Ausführungen gelten sinngemäß auch für das Kit gemäß viertem Erfindungsaspekt.

Weitere Merkmale und Vorteile der Erfindung ergeben sich aus der nachfolgenden Beschreibung von bevorzugten Ausführungsformen in Form von Figuren und Beispielen. Dabei können einzelne Merkmale jeweils für sich alleine oder in Kombination miteinander verwirklicht sein. Die nachfolgend beschriebenen Beispiele dienen lediglich der weiteren Erläuterung der Erfindung, ohne die Erfindung auf den Offenbarungsgehalt der Beispiele zu beschränken.

### FIGURENKURZBESCHREIBUNG

In den Figuren ist Folgendes schematisch dargestellt:
- Fig.1:: das Reaktionsschema zur Herstellung eines Hybridkieselgels ausgehend von einem Alkyltrichlorsilan und Wasser, das kein Teil der Erfindung ist; und

- Fig. 2a-d:: die Strukturformeln einiger Alkyltrichlorsilane, die kein Teil der Erfindung ist.

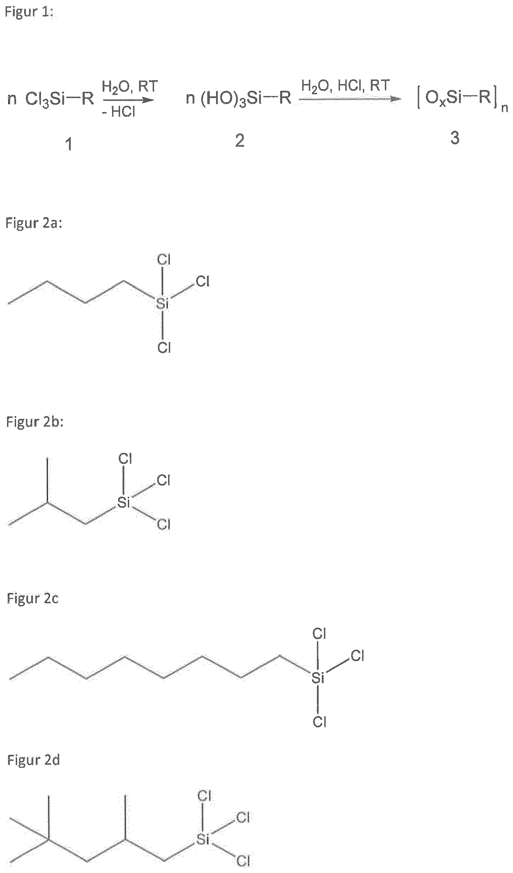

Fig. 1 zeigt schematisch das grundsätzliche Reaktionsschema, welches der Umsetzung eines Alkyltrichlorsilans 1 zu einem Hybridkieselgel 3, insbesondere makromolekularem Hybridkieselgel 3, welches zum Einschluss von Mikroplastik-Partikeln und/oder agglomerierten Mikroplastik-Partikeln tauglich ist, zugrunde liegt.

Bei Kontakt mit Wasser werden die Silicium-Chlor-Bindungen des Alkyltrichlorsilans 1 unter Entstehung von Salzsäure zu Silanolverbindungen 2 hydrolysiert. Aufgrund einer katalytischen Wirkung der freigesetzten Salzsäure durchlaufen die intermediär auftretenden Silanolverbindungen 2 rasch Kondensationsreaktionen, wobei das Hybridkieselgel 3 entsteht.

Über die Alkylgruppe des Alkyltrichlorsilans 1 ist es möglich, im Wasser und/oder einem Gewässer verteilte Mikroplastik-Partikel zu lokalisieren und zu aggregieren. Hierfür ist eine gewisse Anfangsstabilität des Alkyltrichlorsilans von Vorteil, damit eine ausreichende Lokalisation und Aggregation von Mikroplastik-Partikeln erfolgen kann, ehe der Einschluss der Mikroplastik-Partikel/aggregierten Mikroplastik-Partikel durch Ausbildung des Hybridkieselgels, insbesondere im Wege eines Sol-Gel-Prozesses, erfolgt.

Bei dem Alkyltrichlorsilan kann es sich insbesondere um n-Butyltrichlorsilan, Isobutyltrichlorsilan, n-Octyltrichlorsilan oder 2,4,4-Trimethylpentyltrichlorsilan handeln.

Fig. 2a zeigt die Strukturformel von n-Butyltrichlorsilan. Fig. 2b zeigt die Strukturformel von Isobutyltrichlorsilan. Fig. 2c zeigt die Strukturformel von n-Octyltrichlorsilan. Fig. 2d zeigt die Strukturformel von 2,4,4-Trimethylpentyltrichlorsilan. Die Verwendung dieser Alkyltrichlorsilane zur Entfernung von Mikroplastik-Partikeln aus Wasser und/oder einem Gewässer ist besonders bevorzugt.

### BEISPIELTEIL

### 1. Allgemeine Versuchsvorschrift zur Bildung von Agglomerationsverbindungen

### 1.1 Labormaßstab

100 mg Mikroplastikpulver (PE, PP oder Mischungen) (150 µm - 300 µm) und 1 l destilliertes Wasser wurden in ein 2 L Rundkoben vorgelegt und stark gerührt (24 h Quellprozess). Eine geringe Menge (ca 50-100 µmol) Agglomerationsreagenz wurde langsam hinzugefügt. Das Reaktionsgemisch wurde bei 250 rpm und 25 °C gerührt. Nach 20 min, wurde das Gemisch gefiltert und der weiße Feststoff wurde bei 105°C für 24 h getrocknet. Das Silan bildete zunächst kleine Tröpfchen, welche im Gefäß zirkulierten (Lokalisation). Die Tröpfchen akkumulierten die Mikroplastikpartikel innerhalb von 3-4 min. Nach 2 min setzte die Gelbildung ein und ein großes Agglomerat wurde gebildet, welches an der Wasseroberfläche trieb (Fixierung). Nach 10 min war kein freies PE, PP oder Gemischen aus beidem mehr ungebunden im Reaktionsgefäß. Der pH-Wert des Wassers betrug 6-7.

### 1.2 Technikumsmaßstab

100 g Mikroplastikpulver (PP, PE/PP(1/1) (150 µm - 300 µm) und 2000 l Brauchwasser (Nachklärbecken) wurden in einen diskontinuierlichen 2000-L-Batch-Reaktor gefüllt. Anschließend wurde bei Raumtemperatur 24 h 250 U/min gerührt (Quellprozess). Der Agglomerationsprozess wurde eingeleitet in dem Agglomerationsreagenz (ca 50-100 mmol) hinzugegeben wurde und das Gemisch 24 h, bei Raumtemperatur und 250 U/min gerührt wurde. Die Mischung wurde filtriert und die agglomerierten weißen Feststoffe wurden bei 105 °C für 24 h getrocknet. Die agglomerierten Feststoffe hatten einen Durchmesser von 2-6 cm.

### 2. Allgemeine Informationen

GUR 4150 UHMW-PE Partikel wurden von Celanese bezogen. Weitere PE (LDPE, HDPE)und PP Mikroplastikpartikel wurden von der Firma LyondellBasell erworben.

Die in untenstehender Table 1 aufgeführten Alkyltrichlorsilane (die kein Teil der Erfindung sind) und Silsesquioxane wurden in den nachfolgend beschriebenen Versuchen eingesetzt.

**Tabelle 1: verwendete Alkyltrichlorsilane und Silsesquioxane**

| Name | CAS.no. |
|---|---|
| n-Butyltrichlorsilan | 7521-80-4 |
| Isobutyltrichlorsilan | 18169-57-8 |
| n-Octyltrichlorsilan | 5283-66-9 |
| Isooctyltrichlorsilan | 18379-25-4 |
| Isooctyl POSS Cage Mixture | 1472635-27-0 |

Environmental Scanning Electron Microscopes (ESEM)-Aufnahmen von Hybridkieselgelen (Probengröße bis zu 3 mm) wurden unter Verwendung eines FEI Quanta 250 ESEM (FEI Company, Hillsboro, USA) mit geringem Vakuum (60 und 80 Pa) aufgenommen. Um Bilder mit guter Qualität zu erzeugen, wurde ein Large-Field-Detektor (LFD) mit einer Beschleunigungsspannung zwischen 7 und 20 kV verwendet. Die IR-Spektren wurden mit FTIR Nicolet iS10 (Thermo, Dreieich, Deutschland) und FTIR Nicolet iS5 (Thermo, Dreieich, Deutschland) gemessen. Zusätzlich wurden IR-Spektren auf VARIAN FT-IR 630 mit ATR-Hecht (4000-400 cm-1) aufgenommen.

### 3. Allgemeine Versuchsvorschrift zur Bildung von Agglomerationsverbindungen

100 mg Mikroplastikpulver (PE, PP oder Mischungen) (150 µm - 300 µm) und 1 l destilliertes Wasser wurden in ein 2 L Rundkoben vorgelegt und stark gerührt. Eine geringe Menge (1*10⁻³ mol) Agglomerationsreagenz (Versuche 1-6) wurde langsam hinzugefügt. Das Reaktionsgemisch wurde bei 250 rpm und 25 °C gerührt. Nach 20 min wurde das Gemisch gefiltert und der weiße Feststoff wurde bei 60°C für 24 h getrocknet.

### 4. Versuche; wobei die Experimente 4.1-4.4.4. kein Teil der Erfindung formen.

### 4.1 Synthese einer Mikroplastik-Einschlussverbindung unter Verwendung von n-Octyltrichlorsilan (nicht erfindungsgemäß)

### 4.1.1 Synthese eines Hybridkieselgels auf Basis von n-Octyltrichlorsilan

1 L destilliertes Wasser wurde in einem 2 L Rundkolben vorgelegt und stark gerührt. 43.2 µmol n-Octyltrichlorsilan wurde langsam hinzugefügt. Das Reaktionsgemisch wurde bei 250 rpm und 25 °C gerührt. Die Gelbildung setzte direkt bei Wasserkontakt ein und mehrere Agglomerate wurden gebildet. Nach 20 min wurde das Gemisch gefiltert, mit Wasser gewaschen und der weiße, sehr voluminöse Feststoff wurde bei 60 °C für 24 h getrocknet. Es entstand ein transparenter Feststoff.

EA: C 77.93, H 14.44, N 0
IR: n-octyl bei v (CH₂) 2951 cm⁻¹,2905 cm⁻¹, δ (CH) 1430-1485 cm⁻¹, v (Si-O-Si) 1106 cm⁻¹.

### 4.1.2 Synthese einer LDPE/HDPE-Mikroplastik-Einschlussverbindung

100 mg Mikroplastikpulver (LDPE/HDPE) (50 µm - 300 µm) und 1 L destilliertes Wasser wurden in einem 2 L Rundkolben vorgelegt und stark gerührt (24 h Quellprozess). 43.2 µmol n-Octyltrichlorsilan wurde langsam hinzugefügt. Das Reaktionsgemisch wurde bei 250 rpm und 25 °C gerührt. Das Silan bildete zunächst kleine Tröpfchen, welche im Gefäß zirkulierten (Lokalisation). Die Tröpfchen akkumulierten die Mikroplastikpartikel zum Teil (ca. 50 %) innerhalb von 3-4 min. Die Gelbildung setzte direkt bei Wasserkontakt ein und mehrere Agglomerate wurden gebildet, welche an der Wasseroberfläche trieben (Fixierung). Nach 10 min waren 50 % (Massebilanz) PE gebunden und 50 % ungebunden im Reaktionsgefäß vorliegend. Der pH-Wert des Wassers betrug 6-7. Es wurde weitere 10 min gerührt, anschließend filtriert, mit Wasser gewaschen und 24 h getrocknet bei 60 °C. Es entstand ein transparenter Feststoff mit eingebundenen weißen Mikroplastikpartikeln.

EA: C 79.23, H 14.00, N 0
IR: PE v (CH₂) 2920 2870 cm⁻¹ (R= n-octyl wird überlagert v (CH₂) 2951 cm⁻¹,2905 cm⁻¹), δ (CH) 1430-1485 cm⁻¹, v (Si-O-Si) 1106 cm⁻¹.

### 4.1.3 Synthese einer PP-Mikroplastik-Einschlussverbindung

100 mg Mikroplastikpulver (PP) (50 µm - 300 µm) und 1 L destilliertes Wasser wurden in einem 2 L Rundkolben vorgelegt und stark gerührt (24 h Quellprozess). 43.2 µmol n-Octyltrichlorsilan wurde langsam hinzugefügt. Das Reaktionsgemisch wurde bei 250 rpm und 25 °C gerührt. Das Silan bildete zunächst kleine Tröpfchen, welche im Gefäß zirkulierten (Lokalisation). Die Tröpfchen akkumulierten die Mikroplastikpartikel zum Teil (ca. 50 %) innerhalb von 3-4 min. Die Gelbildung setzte direkt bei Wasserkontakt ein und mehrere Agglomerate wurden gebildet, welche an der Wasseroberfläche trieben (Fixierung). Nach 10 min waren 50 % (Massebilanz) PE gebunden und 50 % ungebunden im Reaktionsgefäß vorliegend. Der pH-Wert des Wassers betrug 6-7. Es wurde weitere 10 min gerührt, anschließend filtriert, mit Wasser gewaschen und 24 h getrocknet bei 60 °C. Es entstand ein transparenter Feststoff mit eingebundenen weißen Mikroplastikpartikeln.

EA: C 76.80, H 14.05, N 0
IR: PP v (CH₂) 2920 2870 cm⁻¹ (R= n-octyl wird überlagert v (CH₂) 2951 cm⁻¹, 2905 cm⁻¹, δ (CH) 1430-1485 cm⁻¹, v (Si-O-Si) 1106 cm⁻¹.

### 4.1.4 Synthese einer PE/PP-Mikroplastik-Einschlussverbindung

100 mg Mikroplastikpulver (LDPE/HDPE/PP 0,5/0,5/1) (50 µm - 300 µm) und 1 L destilliertes Wasser wurden in einem 2 L Rundkolben vorgelegt und stark gerührt (24 h Quellprozess). 43.2 µmol n-Octyltrichlorsilan wurde langsam hinzugefügt. Das Reaktionsgemisch wurde bei 250 rpm und 25 °C gerührt. Das Silan bildete zunächst kleine Tröpfchen, welche im Gefäß zirkulierten (Lokalisation). Die Tröpfchen akkumulierten die Mikroplastikpartikel zum Teil (ca. 50 %) innerhalb von 3-4 min. Die Gelbildung setzte direkt bei Wasserkontakt ein und mehrere Agglomerate wurden gebildet, welche an der Wasseroberfläche trieben (Fixierung). Nach 10 min waren 50 % (Massebilanz) Mikroplastikgemisch gebunden und 50 % ungebunden im Reaktionsgefäß vorliegend. Der pH-Wert des Wassers betrug 6-7. Es wurde weitere 10 min gerührt, anschließend filtriert, mit Wasser gewaschen und 24 h getrocknet bei 60 °C. Es entstand ein transparenter Feststoff mit eingebundenen weißen Mikroplastikpartikeln.

IR: PE/PP v (CH₂) 2920 2870 cm⁻¹ (R= n-octyl wird überlagert v (CH₂) 2951 cm⁻¹, 2905 cm⁻¹, δ (CH) 1430-1485 cm⁻¹, v (Si-O-Si) 1106 cm⁻¹.

### 4.2 Synthese einer Mikroplastik-Einschlussverbindung unter Verwendung von n-Butyltrichlorsilan

### 4.2.1 Synthese eines Hybridkieselgels auf Basis von n-Butyltrichlorsilan (nicht erfindungsgemäß)

1 L destilliertes Wasser wurde in einem 2 L Rundkolben vorgelegt und stark gerührt. 60.5 µmol n-Butyltrichlorsilan wurde langsam hinzugefügt. Das Reaktionsgemisch wurde bei 250 rpm und 25 °C gerührt. Das Silan bildete kleine Tröpfchen, welche auf den Boden absanken. Die Gelbildung setzt nach 2 min ein und ein großes Agglomerat wurde gebildet. Nach 20 min, wurde das Gemisch gefiltert, mit Wasser gewaschen und der weiße Feststoff wird bei 60 °C für 24 h getrocknet. Es entstand ein weißer gelartiger Feststoff.

EA: C 41.16, H 07.93, N 0
IR: n-Butyl v (CH₂) 2950 cm⁻¹-2870 cm⁻¹, δ (CH) 1465-1407 cm⁻¹, v (Si-O-Si) 1202 cm⁻¹, (vSi-O) 874-688 cm⁻¹.

### 4.2.2 Synthese einer PE-Mikroplastik-Einschlussverbindung

100 mg Mikroplastikpulver (LDPE/HDPE) (50 µm - 300 µm) und 1 L destilliertes Wasser wurden in einem 2 L Rundkolben vorgelegt und stark gerührt (24 h Quellprozess). 60.5 µmol n-Butyltrichlorsilan wurde langsam hinzugefügt. Das Reaktionsgemisch wurde bei 250 rpm und 25 °C gerührt. Das Silan bildete zunächst kleine Tröpfchen, welche im Gefäß zirkulierten (Lokalisation). Die Tröpfchen akkumulierten die Mikroplastikpartikel vollständig (ca. 75 %) innerhalb von 2-4 min. Die Gelbildung setzte nach 2 min ein und ein großes Agglomerat wurde gebildet, welches an der Wasseroberfläche trieb (Fixierung). Nach 10 min waren 75 % (Massebilanz) PE gebunden. Der pH-Wert des Wassers betrug 6-7. Es wurde weitere 10 min gerührt, anschließend filtriert, mit Wasser gewaschen und 24 h getrocknet bei 60 °C. Es entstand ein transparenter Feststoff mit eingebundenen weißen Mikroplastikpartikeln.

EA: C 75.04, H 12.74, N 0
IR: PE v (CH₂) 2920 2870 cm⁻¹ (R= n-butyl wird überlagert v (CH₂) 2951 cm⁻¹, 2905 cm⁻¹, δ (CH) 1430-1485 cm⁻¹, v (Si-O-Si) 1106 cm⁻¹.

### 4.2.3 Synthese einer PP-Mikroplastik-Einschlussverbindung

100 mg Mikroplastikpulver (PP) (50 µm - 300 µm) und 1 L destilliertes Wasser wurden in einem 2 L Rundkolben vorgelegt und stark gerührt (24 h Quellprozess). 60.5 µmol n-Butyltrichlorsilan wurde langsam hinzugefügt. Das Reaktionsgemisch wurde bei 250 rpm und 25 °C gerührt. Das Silan bildete zunächst kleine Tröpfchen, welche im Gefäß zirkulierten (Lokalisation). Die Tröpfchen akkumulierten die Mikroplastikpartikel vollständig (ca. 75 %) innerhalb von 2-4 min. Die Gelbildung setzte nach 2 min ein und ein großes Agglomerat wurde gebildet, welches an der Wasseroberfläche trieb (Fixierung). Nach 10 min waren 100 % (Massebilanz) PP gebunden. Der pH-Wert des Wassers betrug 6-7. Es wurde weitere 10 min gerührt, anschließend filtriert, mit Wasser gewaschen und 24 h getrocknet bei 60 °C. Es entstand ein transparenter Feststoff mit eingebundenen weißen Mikroplastikpartikeln.

EA: C 80.30, H 13.76, N 0

IR: PP v (CH₂) 2920 2870 cm⁻¹ (R= n-butyl wird überlagert v (CH₂) 2951 cm⁻¹, 2905 cm⁻¹, δ (CH) 1430-1485 cm⁻¹, v (Si-O-Si) 1106 cm⁻¹.

### 4.2.4 Synthese einer PE/PP-Mikroplastik-Einschlussverbindung

100 mg Mikroplastikpulver (LDPE/HDPE/PP; 0,5/0,5/1) (50 µm - 300 µm) und 1 L destilliertes Wasser wurden in einem 2 L Rundkolben vorgelegt und stark gerührt (24 h Quellprozess). 60.5 µmol n-Butyltrichlorsilan wurde langsam hinzugefügt. Das Reaktionsgemisch wurde bei 250 rpm und 25 °C gerührt. Das Silan bildete zunächst kleine Tröpfchen, welche im Gefäß zirkulierten (Lokalisation). Die Tröpfchen akkumulierten die Mikroplastikpartikel vollständig (ca. 75 %) innerhalb von 2-4 min. Die Gelbildung setzte nach 2 min ein und ein großes Agglomerat wurde gebildet, welches an der Wasseroberfläche trieb (Fixierung). Nach 10 min waren 100 % (Massebilanz) Mikroplastikgemisch gebunden. Der pH-Wert des Wassers betrug 6-7. Es wurde weitere 10 min gerührt, anschließend filtriert, mit Wasser gewaschen und 24 h getrocknet bei 60 °C. Es entstand ein transparenter Feststoff mit eingebundenen weißen Mikroplastikpartikeln.

EA: C 69.67, H 11.55, N 0
IR: PE/PP v (CH₂) 2920 2870 cm⁻¹ (R= n-butyl wird überlagert v (CH₂) 2951 cm⁻¹, 2905 cm⁻¹, δ (CH) 1430-1485 cm⁻¹, v (Si-O-Si) 1106 cm⁻¹.

### 4.3 Synthese einer Mikroplastik-Einschlussverbindung unter Verwendung von Isobutyltrichlorsilan (nicht erfindungsgemäß)

### 4.3.1 Synthese eines Hybridkieselgels auf Basis von Isobutyltrichlorsilan

1 L destilliertes Wasser wurde in einem 2 L Rundkolben vorgelegt und stark gerührt. 60 µmol Isobutyltrichlorsilan wurde langsam hinzugefügt. Das Reaktionsgemisch wurde bei 250 rpm und 25 °C gerührt. Das Silan bildete kleine Tröpfchen und vermischte sich zunächst nicht mit Wasser. Die Gelbildung setzte nach 6 min ein. Nach 10 min war das Trichlorosilan vollständig zum Hybridkieselgel umgesetzt und kleine Aggregate waren sichtbar. Nach 20 Minuten nahmen die Aggregate an Größe zu. Die Größe der Aggregate betrug 1-3 mm. Das Gemisch wurde gefiltert, mit Wasser gewaschen und der weiße Feststoff wird bei 60 °C für 24 h getrocknet. Es entstand ein weißer Feststoff.

EA (gefunden): C 40.64, H 08.17, N 0
REM EDX: C 47.92, O 37.734, Si 14.35.

IR: v (CH₂) 2953 cm⁻¹,2869 cm⁻¹, δ (CH) 1465-1401 cm⁻¹, v (Si-O-Si) 1128 cm⁻¹-997, v (Si-O) 835-737 cm⁻¹.

### 4.3.2 Synthese einer PE-Mikroplastik-Einschlussverbindung

100 mg Mikroplastikpulver (LDPE/HDPE) (50 µm - 300 µm) und 1 L destilliertes Wasser wurden in einem 2 L Rundkolben vorgelegt und stark gerührt (24 h Quellprozess). 60 µmol Isobutyltrichlorsilan wurde langsam hinzugefügt. Das Reaktionsgemisch wurde bei 250 rpm und 25 °C gerührt. Das Silan bildete zunächst kleine Tröpfchen, welche im Gefäß zirkulierten (Lokalisation). Die Tröpfchen akkumulierten die Mikroplastikpartikel vollständig (ca. 100 %) innerhalb von 2-4 min. Die Gelbildung setzte nach 6 min ein und ein großes Agglomerat wurde gebildet. Nach 10 min war das Trichlorsilan vollständig zum Hybridkieselgel umgesetzt und kleine Aggregate mit dem gebundenen PE (100 % Massebilanz) waren sichtbar. Nach 20 Minuten nahmen die Aggregate an Größe (2-3 mm) zu, welche an der Wasseroberfläche trieben (Fixierung). Der pH-Wert des Wassers betrug 6-7. Es wurde anschließend filtriert, mit Wasser gewaschen und 24 h getrocknet bei 60 °C. Es entstand ein weißer Feststoff mit eingebundenen weißen Mikroplastikpartikeln.

EA (gefunden): C 76.36, H 14.15, N 0
REM EDX (gefunden): C 47.92, O 37.734, Si 14.35.

IR: PE v (CH₂) 2920 2870 cm⁻¹ (R= isobutyl wird überlagert v (CH₂) 2951 cm⁻¹, 2905 cm⁻¹, δ (CH) 1430-1485 cm⁻¹, v (Si-O-Si) 1106 cm⁻¹.

### 4.3.3 Synthese einer PP-Mikroplastik-Einschlussverbindung

100 mg Mikroplastikpulver (PP) (50 µm - 300 µm) und 1 L destilliertes Wasser wurden in einem 2 L Rundkolben vorgelegt und stark gerührt (24 h Quellprozess). 60 µmol Isobutyltrichlorsilan wurde langsam hinzugefügt. Das Reaktionsgemisch wurde bei 250 rpm und 25 °C gerührt. Das Silan bildete zunächst kleine Tröpfchen, welche im Gefäß zirkulierten (Lokalisation). Die Tröpfchen akkumulierten die Mikroplastikpartikel vollständig (ca. 100 %) innerhalb von 2-4 min. Die Gelbildung setzte nach 6 min ein und ein großes Agglomerat wurde gebildet. Nach 10 min war das Trichlorsilan vollständig zum Hybridkieselgel umgesetzt und kleine Aggregate mit dem gebundenen PP (100 % Massebilanz) waren sichtbar. Nach 20 Minuten nahmen die Aggregate an Größe (2-3 mm) zu, welche an der Wasseroberfläche trieben (Fixierung). Der pH-Wert des Wassers betrug 6-7. Es wurde anschließend filtriert, mit Wasser gewaschen und 24 h getrocknet bei 60 °C. Es entstand ein weißer Feststoff mit eingebundenen weißen Mikroplastikpartikeln.

EA (gefunden): C 73.72, H 13.46, N 0
REM EDX (gefunden): C 72.2, O 24.27, Si 3.53.

IR: PP v (CH₂) 2920 2870 cm⁻¹ (R= isobutyl wird überlagert v (CH₂) 2951 cm⁻¹, 2905 cm⁻¹, δ (CH) 1430-1485 cm⁻¹, v (Si-O-Si) 1106 cm⁻¹.

### 4.3.4: Synthese einer PE/PP-Mikroplastik-Einschlussverbindung

100 mg Mikroplastikpulver (LDPE/HDPE/PP, 05/0,5/1) (50 µm - 300 µm) und 1 L destilliertes Wasser wurden in einem 2 L Rundkolben vorgelegt und stark gerührt (24 h Quellprozess). 60 µmol Isobutyltrichlorsilan wurde langsam hinzugefügt. Das Reaktionsgemisch wurde bei 250 rpm und 25 °C gerührt. Das Silan bildete zunächst kleine Tröpfchen, welche im Gefäß zirkulierten (Lokalisation). Die Tröpfchen akkumulierten die Mikroplastikpartikel vollständig (ca. 100 %) innerhalb von 2-4 min. Die Gelbildung setztt nach 6 min ein und ein großes Agglomerat wurde gebildet. Nach 10 min war das Trichlorsilan vollständig zum Hybridkieselgel umgesetzt und kleine Aggregate mit dem gebundenen Mikroplastikgemisch (100 % Massebilanz) waren sichtbar. Nach 20 Minuten nahmen die Aggregate an Größe (2-3 mm) zu, welche an der Wasseroberfläche trieben (Fixierung). Der pH-Wert des Wassers betrug 6-7. Es wurde anschließend filtriert, mit Wasser gewaschen und 24 h getrocknet bei 60 °C. Es entstand ein weißer Feststoff mit eingebundenen weißen Mikroplastikpartikeln.

EA (gefunden): C 75.54, H 13.63, N 0
REM EDX (gefunden): C 46.04, O 40.51, Si 13.452.

IR: PE/PP v (CH₂) 2920 2870 cm⁻¹ (R= isobutyl wird überlagert v (CH₂) 2951 cm⁻¹, 2905 cm⁻¹, δ (CH) 1430-1485 cm⁻¹, v (Si-O-Si) 1106 cm⁻¹.

### 4.4 Synthese einer Mikroplastik-Einschlussverbindung unter Verwendung von Isooctyltrichlorsilan

### 4.4.1 Synthese eines Hybridkieselgels auf Basis von Isooctyltrichlorsilan

1 L destilliertes Wasser wurde in einem 2 L Rundkolben vorgelegt und stark gerührt. 43 µmol Isooctyltrichlorsilan wurde langsam hinzugefügt. Das Reaktionsgemisch wurde bei 250 rpm und 25 °C gerührt. Das Silan bildete kleine Tröpfchen und vermischte sich zunächst nicht mit Wasser und sank zu Boden. Nach 5-10 s setzte die Gelbildung ein und ein großes Aggregat wurde sichtbar, welches an der Wasseroberfläche trieb. Nach 10 min war das Trichlorsilan vollständig zum Hybridkieselgel umgesetzt und kleine Aggregate waren sichtbar. Ein weißes Gel bildete sich. Nach 20 Minuten nahmen die Aggregate an Größe zu. Die Größe der Aggregate betrug 1-3 mm. Das Gemisch wurde gefiltert, mit Wasser gewaschen und der weiße Feststoff wurde bei 60 °C für 24 h getrocknet. Es entstand ein weißer Feststoff.

EA (gefunden): C 40.85, H 08.30, N 0
REM EDX (gefunden): C 49.43, O 40.16, Si 10.41.

IR: Isooctyl v (CH₂) 2951 cm⁻¹,2905 cm⁻¹, δ (CH) 1430-1485 cm⁻¹, v (Si-O-Si) 1106 cm⁻¹.

### 4.4.2 Synthese einer PE-Mikroplastik-Einschlussverbindung

100 mg Mikroplastikpulver (LDPE/HDPE) (50 µm - 300 µm) und 1 L destilliertes Wasser wurden in einem 2 L Rundkolben vorgelegt und stark gerührt (24 h Quellprozess). 43 µmol Isooctyltrichlorsilan wurde langsam hinzugefügt. Das Reaktionsgemisch wurde bei 250 rpm und 25 °C gerührt. Das Silan bildete zunächst kleine Tröpfchen, welche im Gefäß zirkulierten (Lokalisation). Die Tröpfchen akkumulierten die Mikroplastikpartikel vollständig (ca. 100 %) innerhalb von 2-4 min. Die Gelbildung setzte nach 5-10 s ein und ein großes Agglomerat wurde gebildet. Nach 10 min war das Trichlorsilan vollständig zum Hybridkieselgel umgesetzt und kleine Aggregate mit dem gebundenen PE (100 % Massebilanz) waren sichtbar. Nach 20 Minuten nahmen die Aggregate an Größe (2-3 mm) zu, welche an der Wasseroberfläche trieben (Fixierung). Der pH-Wert des Wassers betrug 6-7. Es wurde anschließend filtriert, mit Wasser gewaschen und 24 h getrocknet bei 60 °C. Es entstand ein weißer Feststoff mit eingebundenen weißen Mikroplastikpartikeln.

EA (gefunden): C 70.96, H 14.57, N 0
REM EDX (gefunden): C 79.55, O 15.79, Si 4.65.

IR: PE v (CH₂) 2920 2870 cm⁻¹ (R= isooctyl wird überlagert v (CH₂) 2951 cm⁻¹,2905 cm⁻¹), δ (CH) 1430-1485 cm⁻¹, v (Si-O-Si) 1106 cm⁻¹.

### 4.4.3 Synthese einer PP-Mikroplastik-Einschlussverbindung

100 mg Mikroplastikpulver (PP) (50 µm - 300 µm) und 1 L destilliertes Wasser wurden in einem 2 L Rundkolben vorgelegt und stark gerührt (24 h Quellprozess). 43 µmol Isooctyltrichlorsilan wurde langsam hinzugefügt. Das Reaktionsgemisch wurde bei 250 rpm und 25 °C gerührt. Das Silan bildete zunächst kleine Tröpfchen, welche im Gefäß zirkulierten (Lokalisation). Die Tröpfchen akkumulierten die Mikroplastikpartikel vollständig (ca. 100 %) innerhalb von 2-4 min. Die Gelbildung setzte nach 5-10 s ein und ein großes Agglomerat wurde gebildet. Nach 10 min war das Trichlorosilan vollständig zum Hybridkieselgel umgesetzt und kleine Aggregate mit dem gebundenen PE (100 % Massebilanz) waren sichtbar. Nach 20 Minuten nahmen die Aggregate an Größe (2-3 mm) zu, welche an der Wasseroberfläche trieben (Fixierung). Der pH-Wert des Wassers betrug 6-7. Es wurde anschließend filtriert, mit Wasser gewaschen und 24 h getrocknet bei 60 °C. Es entstand ein weißer Feststoff mit eingebundenen weißen Mikroplastikpartikeln.

EA (gefunden): C 74.95, H 13.59, N 0
REM EDX (gefunden): C 67.56, O 26.6, Si 5.84.

IR: PP v (CH₂) 2920 2870 cm⁻¹ (R= isooctyl wird überlagert v (CH₂) 2951 cm⁻¹, 2905 cm⁻¹, δ (CH) 1430-1485 cm⁻¹, v (Si-O-Si) 1106 cm⁻¹.

### 4.4.4 Synthese einer PE/PP-Mikroplastik-Einschlussverbindung

100 mg Mikroplastikpulver (LDPE/HDPE/PP, 0,5/0,5/1) (50 µm - 300 µm) und 1 L destilliertes Wasser wurden in einem 2 L Rundkolben vorgelegt und stark gerührt (24 h Quellprozess). 43 µmol Isooctyltrichlorsilan wurde langsam hinzugefügt. Das Reaktionsgemisch wurde bei 250 rpm und 25 °C gerührt. Das Silan bildete zunächst kleine Tröpfchen, welche im Gefäß zirkulierten (Lokalisation). Die Tröpfchen akkumulieren die Mikroplastikpartikel vollständig (ca. 100 %) innerhalb von 2-4 min. Die Gelbildung setzte nach 5-10 s ein und ein großes Agglomerat wurde gebildet. Nach 10 min war das Trichlorsilan vollständig zum Hybridkieselgel umgesetzt und kleine Aggregate mit dem gebundenen Mikroplastikgemisch (100 % Massebilanz) waren sichtbar. Nach 20 Minuten nahmen die Aggregate an Größe (2-3 mm) zu, welche an der Wasseroberfläche trieben (Fixierung). Der pH-Wert des Wassers betrug 6-7. Es wurde anschließend filtriert, mit Wasser gewaschen und 24 h getrocknet bei 60 °C. Es entstand ein weißer Feststoff mit eingebundenen weißen Mikroplastikpartikeln.

EA (gefunden): C 78.21, H 14.31, N 0
REM EDX (gefunden): C 62.66, O 29.85, Si 7.485.

IR: PE/PP v (CH₂) 2920 2870 cm⁻¹ (R= isooctyl wird überlagert v (CH₂) 2951 cm⁻¹, 2905 cm⁻¹, δ (CH) 1430-1485 cm⁻¹, v (Si-O-Si) 1106 cm⁻¹.

4.5 Synthese einer Mikroplastik-Einschlussverbindung unter Verwendung von Isooctyl-T₈-Polyoktaedrischem Silsesquioxan; wobei alle nachstehende Experimente erfindungsgemäß sind.

### 4.5.1 Synthese eines Hybridkieselgels auf Basis von Isooctyl-T₈-Polyoktaedrischem Silsesquioxan

1 L destilliertes Wasser wurde in einem 2 L Rundkolben vorgelegt und stark gerührt. 7.64 µmol Isooctyl-T₈-Polyoktaedrisches Silsesquioxan wurde langsam hinzugefügt. Das Reaktionsgemisch wurde bei 250 rpm und 25 °C gerührt. Das hochviskose Silan bildete kleine Tröpfchen und vermischts sich nicht mit Wasser und schwamm auf. Bei Kontakt mit Wasser bildete sich zunächst kein sichtbares Hybridkieselgel. Durch starke Durchmischung war eine Veränderung der Farbe erkennbar. Der Stoff wurde von leicht gelblich zu einer weißlich transparenten hochviskosen Flüssigkeit. Das Gel wurde gefiltert, mit Wasser gewaschen und bei 60 °C für 24 h getrocknet. Es entstand eine weißlich transparente hochviskose Flüssigkeit.

EA (gefunden): C 57.02, H 10.41
IR: Isooctyl v (CH₂) 2951 cm⁻¹,2905 cm⁻¹, δ (CH) 1430-1485 cm⁻¹, v (Si-O-Si) 1106 cm⁻¹.

### 4.5.2 Synthese einer PE-Mikroplastik-Einschlussverbindung

100 mg Mikroplastikpulver (LDPE/HDPE) (50 µm - 300 µm) und 1 L destilliertes Wasser wurden in einem 2 L Rundkolben vorgelegt und stark gerührt (24 h Quellprozess). 7.64 µmol Isooctyl-T₈-Polyoktaedrisches Silsesquioxan wurde langsam hinzugefügt. Das Reaktionsgemisch wurde bei 250 rpm und 25 °C gerührt. Das Silan bildete zunächst kleine Tröpfchen, welche im Gefäß zirkulierten (Lokalisation). Die Tröpfchen akkumulierten die Mikroplastikpartikel vollständig (ca. 100 %) innerhalb von 2-4 min. Die Gelbildung setzte nach 5-6 min ein, wobei die Farbe der Flüssigkeit von leicht gelblich auf weiß wechselt. Nach 5-6 min war ein großes Agglomerat mit dem gebundenen PE (100 % Massebilanz) sichtbar. Der pH-Wert des Wassers betrug 6-7. Das Agglomerat wurde anschließend filtriert, mit Wasser gewaschen und 24 h getrocknet bei 60 °C. Es entstand ein weiße hochviskose Flüssigkeit mit eingebundenen weißen Mikroplastikpartikeln.

EA (gefunden): C 69.51, H 12.18, N 0
REM EDX (gefunden): C 63.13, O 24.26, Si 12.37

IR: PE v (CH₂) 2920 2870 cm⁻¹ (R= isooctyl wird überlagert v (CH₂) 2951 cm⁻¹,2905 cm⁻¹), δ (CH) 1430-1485 cm⁻¹, v (Si-O-Si) 1106 cm⁻¹.

### 4.5.3 Synthese einer PP-Mikroplastik-Einschlussverbindung

100 mg Mikroplastikpulver (PP) (50 µm - 300 µm) und 1 L destilliertes Wasser wurden in einem 2 L Rundkolben vorgelegt und stark gerührt (24 h Quellprozess). 7.64 µmol Isooctyl-T₈-Polyoktaedrisches Silsesquioxan wurde langsam hinzugefügt. Das Reaktionsgemisch wurde bei 250 rpm und 25 °C gerührt. Das Silan bildete zunächst kleine Tröpfchen, welche im Gefäß zirkulierten (Lokalisation). Die Tröpfchen akkumulierten die Mikroplastikpartikel vollständig (ca. 100 %) innerhalb von 2-4 min. Die Gelbildung setzte nach 5-6 min ein, wobei die Farbe der Flüssigkeit von leicht gelblich auf weiß wechselte. Nach 5-6 min war ein großes Agglomerat mit dem gebundenen PP (100 % Massebilanz) sichtbar. Der pH-Wert des Wassers betrug 6-7. Das Agglomerat wurde anschließend filtriert, mit Wasser gewaschen und 24 h getrocknet bei 60 °C. Es entstand eine weiße hochviskose Flüssigkeit mit eingebundenen weißen Mikroplastikpartikeln.

EA (gefunden): C 75.30, H 13.22, N 0
REM EDX (gefunden): C 63.5, O 20.92, Si 15.58.

IR: PP v (CH₂) 2920 - 2870 cm⁻¹ (R= isooctyl wird überlagert v (CH₂) 2951 cm⁻¹,2905 cm⁻¹), δ (CH) 1430-1485 cm⁻¹, v (Si-O-Si) 1106 cm⁻¹.

### 4.5.4 Synthese einer PE/PP-Mikroplastik-Einschlussverbindung

100 mg Mikroplastikpulver (LDPE/HDPE/PP, 0,5/0,5/1) (50 µm - 300 µm) und 1 L destilliertes Wasser wurden in einem 2 L Rundkolben vorgelegt und stark gerührt (24 h Quellprozess). 7.64 µmol Isooctyl-T₈-Polyoktaedrisches Silsesquioxan wurde langsam hinzugefügt. Das Reaktionsgemisch wurde bei 250 rpm und 25 °C gerührt. Das Silan bildete zunächst kleine Tröpfchen, welche im Gefäß zirkulierten (Lokalisation). Die Tröpfchen akkumulierten die Mikroplastikpartikel vollständig (ca. 100 %) innerhalb von 2-4 min. Die Gelbildung setzte nach 5-6 min ein, wobei die Farbe der Flüssigkeit von leicht gelblich auf weiß wechselte. Nach 5-6 min war ein großes Agglomerat mit dem gebundenen Mikroplastikgemisch (100 % Massebilanz) sichtbar. Der pH-Wert des Wassers betrug 6-7. Das Agglomerat wurde anschließend filtriert, mit Wasser gewaschen und 24 h getrocknet bei 60 °C. Es entstand ein weiße hochviskose Flüssigkeit/Feststoff mit eingebundenen weißen Mikroplastikpartikeln.

EA (gefunden): C 77.75, H 13.86, N 0
REM EDX (gefunden): C 63.43, O 21.38, Si 15.19.

IR: PE/PP v (CH₂) 2920 - 2870 cm⁻¹ (R= isooctyl wird überlagert v (CH₂) 2951 cm⁻¹, 2905 cm⁻¹, δ (CH) 1430-1485 cm⁻¹, v (Si-O-Si) 1106 cm⁻¹.

### 4.6 Synthese einer Mikroplastik-Einschlussverbindung unter Verwendung von Isooctyl-T8-Polyoktaedrischem Silsesquioxan im 2000 L Technikumsmaßstab

### 4.6.1 Synthese einer PE-Mikroplastik-Einschlussverbindung

100 g Mikroplastikpulver (LDPE/HDPE) (150 µm-300 µm) und 2000 L Brauchwasser (Nachklärbecken) wurden in einen diskontinuierlichen 2000-L-Batch-Reaktor gefüllt. Anschließend wurde bei einer Außentemperatur (15-20 °C) 24 h 250 U/min gerührt (Quellprozess). Der Agglomerationsprozess wurde eingeleitet in dem 7.64 mmol Isooctyl-T₈-Polyoktaedrisches Silsesquioxan hinzugegeben wurden und das Gemisch 24 h, bei Außentemperatur (15-20 °C) und 250 U/min gerührt wurde. Die Mischung wurde filtriert und die weißen Agglomerate wurden bei 60 °C für 24 h getrocknet. Die weißen Agglomerate hatten einen Durchmesser von 2-6 cm.

IR: PE v (CH₂) 2920 - 2870 cm⁻¹ (R= isooctyl wird überlagert v (CH₂) 2951 cm⁻¹,2905 cm⁻¹), δ (CH) 1430-1485 cm⁻¹, v (Si-O-Si) 1106 cm⁻¹.

### 4.6.2 Synthese einer PP-Mikroplastik-Einschlussverbindung

100 g Mikroplastikpulver (PP) (150 µm-300 µm) und 2000 L Brauchwasser (Nachklärbecken) wurden in einen diskontinuierlichen 2000-L-Batch-Reaktor gefüllt. Anschließend wurde bei einer Außentemperatur (15-20 °C) 24 h 250 U/min gerührt (Quellprozess). Der Agglomerationsprozess wurde eingeleitet in dem 7.64 mmol Isooctyl-T₈-Polyoktaedrisches Silsesquioxan hinzugegeben wurden und das Gemisch 24 h, bei Außentemperatur (15-20 °C) und 250 U/min gerührt wurde. Die Mischung wurde filtriert und die weißen Agglomerate wurden bei 60 °C für 24 h getrocknet. Die weißen Agglomerate hatten einen Durchmesser von 2-6 cm.

IR: PE v (CH₂) 2920 - 2870 cm⁻¹ (R= isooctyl wird überlagert v (CH₂) 2951 cm⁻¹,2905 cm⁻¹), δ (CH) 1430-1485 cm⁻¹, v (Si-O-Si) 1106 cm⁻¹.

### 4.6.3 Synthese einer PE/PP-Mikroplastik-Einschlussverbindung

100 g Mikroplastikpulver (LDPE/HDPE/PP, 0,5/0,5/1) (150 µm-300 µm) und 2000 L Brauchwasser (Nachklärbecken) wurden in einen diskontinuierlichen 2000-L-Batch-Reaktor gefüllt. Anschließend wurde bei einer Außentemperatur (15-20 °C) 24 h 250 U/min gerührt (Quellprozess). Der Agglomerationsprozess wurde eingeleitet in dem 7.64 mmol Isooctyl-T₈-Polyoktaedrisches Silsesquioxan hinzugegeben wurden und das Gemisch 24 h, bei Außentemperatur (15-20 °C) und 250 U/min gerührt wurde. Die Mischung wurde filtriert und die weißen Agglomerate wurden bei 60 °C für 24 h getrocknet. Die weißen Agglomerate hatten einen Durchmesser von 2-6 cm.

IR: PE v (CH₂) 2920 - 2870 cm⁻¹ (R= isooctyl wird überlagert v (CH₂) 2951 cm⁻¹,2905 cm⁻¹), δ (CH) 1430-1485 cm⁻¹, v (Si-O-Si) 1106 cm⁻¹.

## Patentansprüche

1. Verwendung
- eines Silsesquioxans der nachstehenden Formel II
[RSiO_{3/2}]ₙ (Formel II),
wobei
R eine Alkylgruppe, Si ein Siliziumatom, O ein Sauerstoffatom und n eine ganze Zahl bedeuten,
zur Entfernung von Mikroplastik-Partikeln aus Wasser und/oder einem Gewässer.

2. Verwendung nach Anspruch 1, **dadurch gekennzeichnet, dass** es sich bei dem Silsesquioxan um ein ungeträgertes Silsesquioxan handelt.

3. Verwendung nach Anspruch 1 oder 2, **dadurch gekennzeichnet, dass** R eine Alkylgruppe mit 1 Kohlenstoffatom bis 16 Kohlenstoffatomen, insbesondere 3 Kohlenstoffatomen bis 14 Kohlenstoffatomen, vorzugsweise 4 Kohlenstoffatomen bis 8 Kohlenstoffatomen, ist.

4. Verwendung nach einem der vorhergehenden Ansprüche, **dadurch gekennzeichnet**, das R eine lineare Alkylgruppe ist.

5. Verwendung nach einem der Ansprüche 1 bis 3, **dadurch gekennzeichnet, dass** R eine verzweigte Alkylgruppe ist.

6. Verwendung nach einem der vorhergehenden Ansprüche, **dadurch gekennzeichnet, dass** R ausgewählt ist aus der Gruppe bestehend aus n-Butylgruppe, Isobutylgruppe, Hexylgruppe, Isohexylgruppe, 2,4,4-Trimethylpentylgruppe, n-Octylgruppe, 6-Methylheptylgruppe, Nonylgruppe, Decylgruppe, Dodecylgruppe, Tetradecylgruppe und Hexadecylgruppe.

7. Verwendung nach einem der vorhergehenden Ansprüche, **dadurch gekennzeichnet, dass** R ausgewählt ist aus der Gruppe bestehend aus n-Butylgruppe, Isobutylgruppe, n-Octylgruppe und 2,4,4-Trimethylpentylgruppe.

8. Verwendung nach einem der Ansprüche 1 bis 3, **dadurch gekennzeichnet, dass** das Silsesquioxan wenigstens zwei unterschiedliche Alkylgruppen, insbesondere ausgewählt aus der Gruppe bestehend aus n-Butylgruppe, Isobutylgruppe, Hexylgruppe, Isohexylgruppe, 2,4,4-Trimethylpentylgruppe, n-Octylgruppe, 6-Methylheptylgruppe, Nonylgruppe, Decylgruppe, Dodecylgruppe, Tetradecylgruppe und Hexadecylgruppe, aufweist.

9. Verwendung nach einem der vorhergehenden Ansprüche, **dadurch gekennzeichnet, dass** es sich bei dem Silsesquioxan um einen Reinstoff oder ein Gemisch verschiedener Silsesquioxane handelt.

10. Verwendung nach einem der vorhergehenden Ansprüche, **dadurch gekennzeichnet, dass** n eine ganze Zahl von 4 bis 16, insbesondere 6 bis 14, bevorzugt 6 bis 12, insbesondere die ganze Zahl 6, 8, 10 oder 12, bedeutet.

11. Verwendung nach einem der vorhergehenden Ansprüche, **dadurch gekennzeichnet, dass** es sich bei dem Silsesquioxan um ein Silsesquioxan der nachstehenden Formel III handelt: 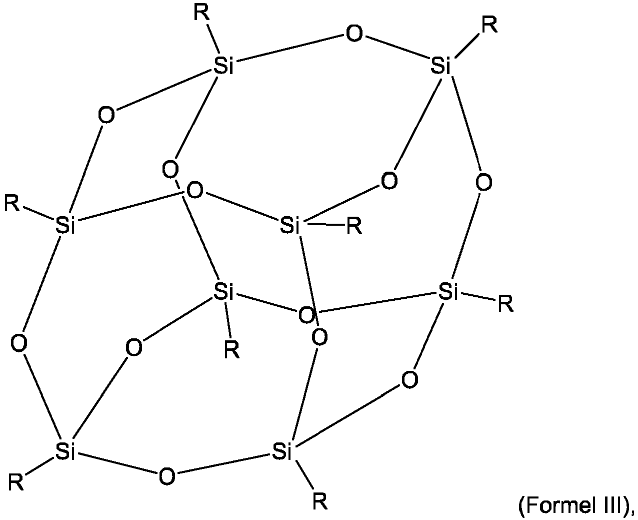 wobei
R eine Alkylgruppe, Si ein Siliziumatom und O ein Sauerstoffatom bedeuten.

12. Verfahren zum Entfernen von Mikroplastik-Partikeln aus Wasser und/oder einem Gewässer, aufweisend die folgenden Schritte:
a) Dosieren oder Zugeben eines Silsesquioxans der nachstehenden Formel II
[RSiO_{3/2}]ₙ (Formel II),
wobei
R eine Alkylgruppe, Si ein Siliziumatom, O ein Sauerstoffatom und n eine ganze Zahl bedeuten,
zu einem mikroplastikpartikelhaltigen Wasser und/oder mikroplastikpartikelhaltigen Gewässer und
b) Entfernen von nach Zugeben des Silsesquioxans entstandenen Einschlussverbindungen aus dem Wasser und/oder Gewässer, wobei die Einschlussverbindungen jeweils ein Hybridkieselgel und Mikroplastik-Partikel aufweisen, wobei das Hybridkieselgel durch Umsetzung des Silsesquioxans in dem Wasser und/oder Gewässer gebildet ist und die Mikroplastik-Partikel wenigstens teilweise einschließt.

13. Verfahren nach Anspruch 12, weiter **gekennzeichnet durch** die Merkmale des kennzeichnenden Teils wenigstens eines der Ansprüche 2 bis 11.

14. Einschlussverbindung, aufweisend ein Hybridkieselgel und Mikroplastik-Partikel, wobei das Hybridkieselgel durch Umsetzung eines Silsesquioxans der nachstehenden Formel II
[RSiO_{3/2}]ₙ (Formel II),
wobei
R eine Alkylgruppe, Si ein Siliziumatom, O ein Sauerstoffatom und n eine ganze Zahl bedeuten,
in Wasser und/oder einem Gewässer gebildet ist und die Mikroplastik-Partikel wenigstens teilweise einschließt.

15. Verwendung eines Kits zum Entfernen von Mikroplastik-Partikeln aus Wasser und/oder einem Gewässer,
aufweisend räumlich voneinander getrennt
ein Silsesquioxan nach einem der Ansprüche 1 bis 11
und
wenigstes eine weitere Komponente, wobei die weitere Komponente ein Adsorptionsmittel, insbesondere ausgewählt aus der Gruppe bestehend aus Aktivkohle, Calcium-Silica-Hydrate, Polonit, Gesteine und Kombinationen von wenigstens zwei der genannten Adsorptionsmittel, ist.

## Claims

1. Use of
a silsesquioxane of the following formula II
[RSiO_{3/2}]ₙ (formula II),
wherein
R represents an alkyl group, Si represents a silicon atom, O represents an oxygen atom and n represents an integer
for the removal of microplastic particles from water and/or a body of water.

2. Use according to claim 1, **characterized in that** the silsesquioxane is an unsupported silsesquioxane.

3. Use according to claim 1 or 2, **characterized in that** R is an alkyl group having 1 carbon atom to 16 carbon atoms, in particular 3 carbon atoms to 14 carbon atoms, preferably 4 carbon atoms to 8 carbon atoms.

4. Use according to one of the preceding claims, **characterized in that** R is a linear alkyl group.

5. Use according to one of the claims 1 to 3, **characterized in that** R is a branched alkyl group.

6. Use according to one of the preceding claims, **characterized in that** R is selected from the group consisting of n-butyl group, isobutyl group, hexyl group, isohexyl group, 2,4,4-trimethylpentyl group, n-octyl group, 6-methylheptyl group, nonyl group, decyl group, dodecyl group, tetradecyl group and hexadecyl group.

7. Use according to one of the preceding claims, **characterized in that** R is selected from the group consisting of n-butyl group, isobutyl group, n-octyl group and 2,4,4-trimethylpentyl group.

8. Use according to one of the claims 1 to 3, **characterized in that** the silsesquioxane comprises at least two different alkyl groups, in particular selected from the group consisting of n-butyl group, isobutyl group, hexyl group, isohexyl group, 2,4,4-trimethylpentyl group, n-octyl group, 6-methylheptyl group, nonyl group, decyl group, dodecyl group, tetradecyl group and hexadecyl group.

9. Use according to one of the preceding claims, **characterized in that** the silsesquioxane is a pure substance or a mixture of different silsesquioxanes.

10. Use according to one of the preceding claims, **characterized in that** n represents an integer from 4 to 16,in particular 6 to 14, preferably 6 to 12, in particular the integer 6, 8, 10 or 12.

11. Use according to one of the preceding claims, **characterized in that** the silsesquioxane is a silsesquioxane of the following formula III: 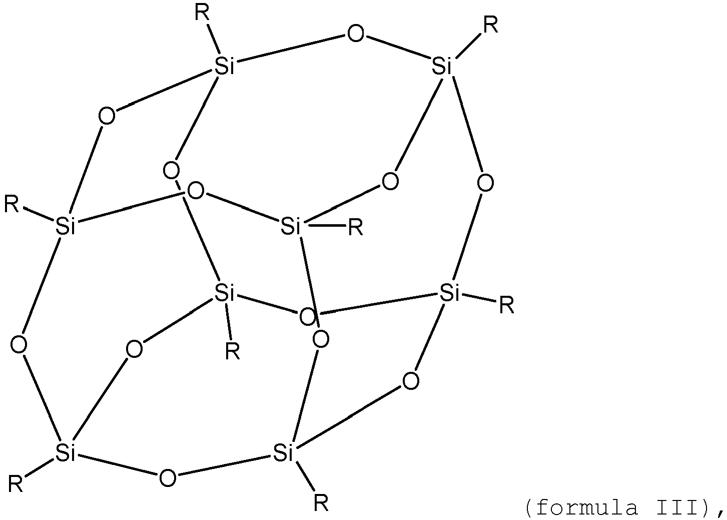 wherein
R represents an alkyl group, Si represents a silicon atom and O represents an oxygen atom.

12. Method for the removal of microplastic particles from water and/or a body of water, the method having the following steps:
a) metering or adding a silsesquioxane of the following formula II
[RSiO_{3/2}]ₙ (formula II),
wherein
R represents an alkyl group, Si represents a silicon atom, O represents an oxygen atom and n represents an integer,
to a microplastic particle-containing water and/or a microplastic particle-containing body of water, and
b)removing, from the water and/or the body of water, inclusion compounds formed after addition of the silsesquioxane, wherein the inclusion compounds each comprise a hybrid silica gel and microplastic particles, wherein the hybrid silica gel is formed by reaction of the silsesquioxane in the water and/or body of water and encloses the microplastic particles at least partially.

13. Method as claimed in claim 12, further **characterized by** the features of the characterizing part of at least one of claims 2 to 11.

14. Inclusion compound, comprising a hybrid silica gel and microplastic particles, wherein the hybrid silica gel is formed by reaction of a silsesquioxane of the following formula II
[RSiO_{3/2}]ₙ (formula II),
wherein
R represents an alkyl group, Si represents a silicon atom, O represents an oxygen atom and n represents an integer,
in water and/or a body of water and at least partially encloses the microplastic particles.

15. Use of a kit for the removal of microplastic particles from water and/or a body of water,
said kit having, spatially separated from one another, a silsesquioxane as claimed in one of claims 1 to 11 and at least one further component, wherein the further component is an adsorbent, in particular selected from the group consisting of activated carbon, calcium-silica hydrates, polonite, rocks and combinations of at least two of the specified adsorbents.

## Revendications

1. Utilisation
- d'un silsesquioxane de la formule II suivante
[RSiO_{3/2}]ₙ (Formule II),
dans laquelle
R signifie un groupe alkyle, Si signifie un atome de silicium, O signifie un atome d'oxygène et n signifie un nombre entier,
afin d'éliminer des particules microplastiques de l'eau et/ou d'un milieu aquatique.

2. Utilisation selon la revendication 1, **caractérisée en ce qu'**il s'agit, pour le silsesquioxane, d'un silsesquioxane non supporté.

3. Utilisation selon la revendication 1 ou 2, **caractérisée en ce que** R représente un groupe alkyle comprenant 1 atome de carbone à 16 atomes de carbone, en particulier 3 atomes de carbone à 14 atomes de carbone, de préférence 4 atomes de carbone à 8 atomes de carbone.

4. Utilisation selon l'une des revendications précédentes, **caractérisée en ce que** R représente un groupe alkyle linéaire.

5. Utilisation selon l'une des revendications 1 à 3, **caractérisée en ce que** R représente un groupe alkyle ramifié.

6. Utilisation selon l'une des revendications précédentes, **caractérisée en ce que** R est choisi dans le groupe constitué par les groupes n-butyle, isobutyle, hexyle, isohexyle, 2,4,4-triméthylpentyle, n-octyle, 6-méthylheptyle, nonyle, décyle, dodécyle, tétradécyle et hexadécyle.

7. Utilisation selon l'une des revendications précédentes, **caractérisée en ce que** R est choisi dans le groupe constitué par les groupes n-butyle, isobutyle, n-octyle et 2,4,4-triméthylpentyle.

8. Utilisation selon l'une des revendications 1 à 3, **caractérisée en ce que** le silsesquioxane présente au moins deux groupes alkyle différents, en particulier choisis dans le groupe constitué par les groupes n-butyle, isobutyle, hexyle, isohexyle, 2,4,4-triméthylpentyle, n-octyle, 6-méthylheptyle, nonyle, décyle, dodécyle, tétradécyle et hexadécyle.

9. Utilisation selon l'une des revendications précédentes, **caractérisée en ce qu'**il s'agit, pour le silsesquioxane, d'une substance pure ou d'un mélange de différents silsesquioxanes.

10. Utilisation selon l'une des revendications précédentes, **caractérisée en ce que** n signifie un nombre entier de 4 à 16, en particulier de 6 à 14, de préférence de 6 à 12, en particulier le nombre entier 6, 8, 10 ou 12.

11. Utilisation selon l'une des revendications précédentes, **caractérisée en ce qu'**il s'agit, pour le silsesquioxane, d'un silsesquioxane de la formule III suivante : 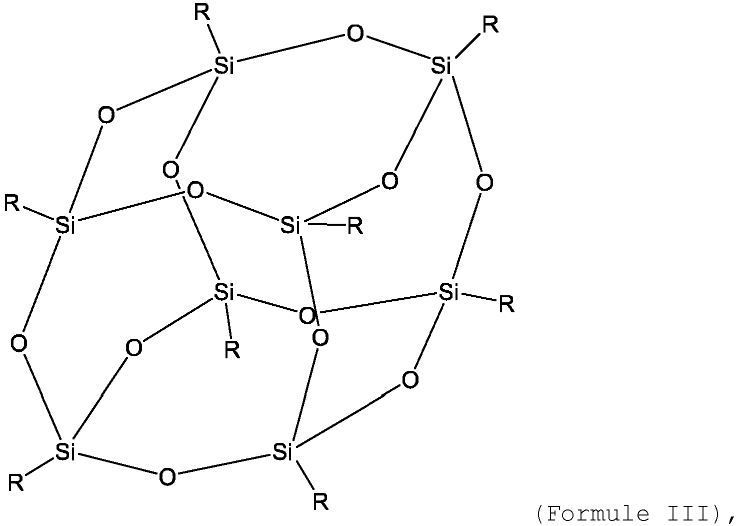 dans laquelle
R signifie un groupe alkyle, Si signifie un atome de silicium et O signifie un atome d'oxygène.

12. Procédé d'élimination de particules microplastiques à partir de l'eau et/ou d'un milieu aquatique, présentant les étapes suivantes :
a) dosage ou ajout d'un silsesquioxane de la formule II suivante
[RSiO_{3/2}], (Formule II),
dans laquelle
R signifie un groupe alkyle, Si signifie un atome de silicium, O signifie un atome d'oxygène et n signifie un nombre entier,
à une eau contenant des particules microplastiques et/ou à un milieu aquatique contenant des particules microplastiques et
b) élimination de composés d'inclusion formés après l'ajout du silsesquioxane à partir de l'eau et/ou du milieu aquatique, les composés d'inclusion présentant à chaque fois un gel silicique hybride et des particules microplastiques, le gel silicique hybride étant formé par transformation du silsesquioxane dans l'eau et/ou le milieu aquatique et renfermant au moins partiellement les particules microplastiques.

13. Procédé selon la revendication 12, en outre **caractérisé par** les caractéristiques de la partie caractérisante d'au moins l'une des revendications 2 à 11.

14. Composé d'inclusion, présentant un gel silicique hybride et des particules microplastiques, le gel silicique hybride étant formé par transformation d'un silsesquioxane de la formule II suivante
[RSiO_{3/2}]ₙ, (Formule II),
dans laquelle
R signifie un groupe alkyle, Si signifie un atome de silicium, O signifie un atome d'oxygène et n signifie un nombre entier,
dans de l'eau et/ou dans un milieu aquatique et renfermant au moins partiellement les particules microplastiques.

15. Utilisation d'un kit destiné à éliminer des particules microplastiques à partir de l'eau et/ou d'un milieu aquatique,
présentant, de manière spatialement séparée l'un de l'autre
un silsesquioxane selon l'une des revendications 1 à 11 et
au moins un autre composant, l'autre composant étant un agent d'adsorption, en particulier choisi dans le groupe constitué par le charbon actif, les hydrates de calcium et de silice, la polonite, les roches et les combinaisons d'au moins deux des agents d'adsorption mentionnés.
